# EUROPEAN PATENT APPLICATION

(11) **EP 4 804 050 A1**
(43) Date of publication of application: **09.09.2026**
(21) Application number: 24900821.0
(22) Date of filing: 14.10.2024
(51) Int. Cl.: G06F 16/34, G06F 16/332, G06F 16/338

(54) **ELECTRONIC DEVICE FOR MANAGING INFORMATION OF DATABASE FOR ARTIFICIAL INTELLIGENCE AND METHOD THEREOF**

(30) Priority: 08.12.2023 KR 20230177794; 28.12.2023 KR 20230195821
(71) Applicant: Samsung Electronics Co., Ltd., Suwon-si, Gyeonggi-do 16677 (KR)
(72) Inventor: KANG, Sungwon, Suwon-si Gyeonggi-do 16677 (KR); CHANG, Sehwan, Suwon-si Gyeonggi-do 16677 (KR)
(74) Representative: Gulde & Partner
(86) International application number: PCT/KR2024/015463
(87) International publication number: WO 2025/121633

(57) **Abstract**

An electronic device according to an embodiment may detect a request for generating a natural language sentence for at least one prompt sentence. In response to the request, the electronic device may generate a response message corresponding to the at least one prompt sentence by using a database in which information is accumulated. The electronic device may control a display to display the generated response message. The database may include, as attributes used to adjust the size of the database, a first attribute indicating whether to remove the information and a second attribute indicating whether an input for prohibiting the removal of the information is received via a screen displayed on the display by using the first attribute.

## Description

### [Technical Field]

The present disclosure relates to an electronic device and a method for managing information in a database for artificial intelligence.

### [Background Art]

Natural language (or ordinary language) refers to a language used in daily human life. An electronic device that analyzes an intention included in natural language is being developed. For example, the electronic device may execute a function indicated by natural language detected from an audio signal including speech and/or text inputted through a keyboard (or a software keyboard).

The above-described information may be provided as related art for the purpose of helping the understanding of the present disclosure. No claim or determination is raised as to whether any of the above-described content may be applied as prior art related to the present disclosure.

### [Disclosure]

### [Technical Solution]

According to an embodiment, an electronic device may comprise a display, memory for storing instructions, and a processor. The instructions, when executed by the processor, may cause the electronic device to detect a request for generating a natural language sentence with respect to at least one prompt sentence. The instructions, when executed by the processor, may cause the electronic device to, in response to the request, generate a response message corresponding to the at least one prompt sentence by using a database in which information is accumulated. The instructions, when executed by the processor, may cause the electronic device to control the display to display the generated response message. The database may include, as attributes to be used to adjust a size of the database, a first attribute indicating whether to delete the information, and a second attribute indicating whether an input for prohibiting deletion of the information is received through a screen displayed on the display by using the first attribute.

In an embodiment, a method of an electronic device comprising a display is provided. The method may comprise detecting a request for generating a natural language sentence with respect to at least one prompt sentence. The method may comprise, in response to the request, generating a response message corresponding to the at least one prompt sentence by using a database in which information is accumulated. The method may comprise controlling the display to display the generated response message. The database may include, as attributes to be used to adjust a size of the database, a first attribute indicating whether to delete the information, and a second attribute indicating whether an input for prohibiting deletion of the information is received through a screen displayed on the display by using the first attribute.

In an embodiment, a non-transitory computer readable storage medium storing instructions may be provided. The instructions, when executed by an electronic device comprising communication circuitry and storage, may cause the electronic device to receive, from a user terminal through the communication circuitry, at least one prompt sentence. The instructions, when executed by the electronic device, may cause the electronic device to generate a response message corresponding to the at least one prompt sentence by using a database stored in the storage. The instructions, when executed by the electronic device, may cause the electronic device to transmit, to the user terminal through the communication circuitry, information used to display the generated response message. The database may include, as attributes to be used to adjust a size of the database occupying the storage, a first attribute indicating whether to delete information stored in the database, and a second attribute indicating whether an input for prohibiting deletion of the information is received before deleting the information by using the first attribute.

According to an embodiment, an electronic device may comprise communication circuitry, memory for storing instructions, and a processor. The instructions, when executed by the processor, may cause the electronic device to receive, from a user terminal through the communication circuitry, at least one prompt sentence. The instructions, when executed by the processor, may cause the electronic device to generate a response message corresponding to the at least one prompt sentence by using a database stored in the storage. The instructions, when executed by the processor, may cause the electronic device to transmit, to the user terminal through the communication circuitry, information used to display the generated response message. The database may include, as attributes to be used to adjust a size of the database occupying the storage, a first attribute indicating whether to delete information stored in the database, and a second attribute indicating whether an input for prohibiting deletion of the information is received before deleting the information by using the first attribute.

### [Description of the Drawings]

FIG. 1 illustrates one or more software applications executed to generate one or more natural language sentences with respect to a user input.
FIGS. 2A and 2B illustrate examples of a system for generating a natural language sentence.
FIGS. 3A and 3B illustrate exemplary operations of a database updater executed to manage a database.
FIG. 4 illustrates an exemplary operation of an electronic device inputting information into a database provided for generation of a natural language sentence.
FIG. 5 illustrates an exemplary operation of an electronic device displaying one or more natural language sentences corresponding to a user input.
FIG. 6 illustrates an exemplary operation of an electronic device adjusting an attribute of information stored in a database.
FIG. 7 illustrates an exemplary operation of an electronic device performed to delete information stored in a database.
FIG. 8 illustrates an exemplary screen of an electronic device displayed while deleting information stored in a database.
FIG. 9 is a block diagram of an electronic device in a network environment according to various embodiments.
FIG. 10 is a block diagram illustrating an integrated intelligence (AI) system according to an embodiment.
FIG. 11 is a diagram illustrating a form in which relationship information between a concept and an action is stored in a database according to an embodiment.
FIG. 12 is a diagram illustrating a user terminal displaying a screen for processing a voice input received through an intelligent application according to an embodiment.

### [Mode for Invention]

Hereinafter, embodiments of the present disclosure will be described in detail with reference to the drawings so that a person having ordinary skill in the art to which the present disclosure belongs may easily implement them. However, the present disclosure may be implemented in various different forms and is not limited to the embodiments described herein. In relation to the description of the drawings, the same or similar reference numerals may be used for the same or similar components. In addition, in the drawings and the related description, descriptions of well-known functions and configurations may be omitted for clarity and conciseness.

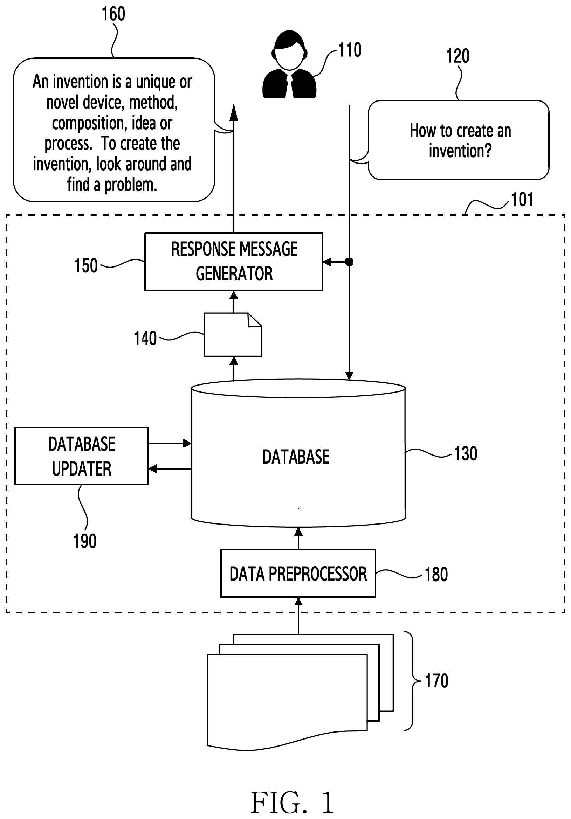

FIG. 1 illustrates one or more software applications executed to generate one or more natural language sentences with respect to a user input.

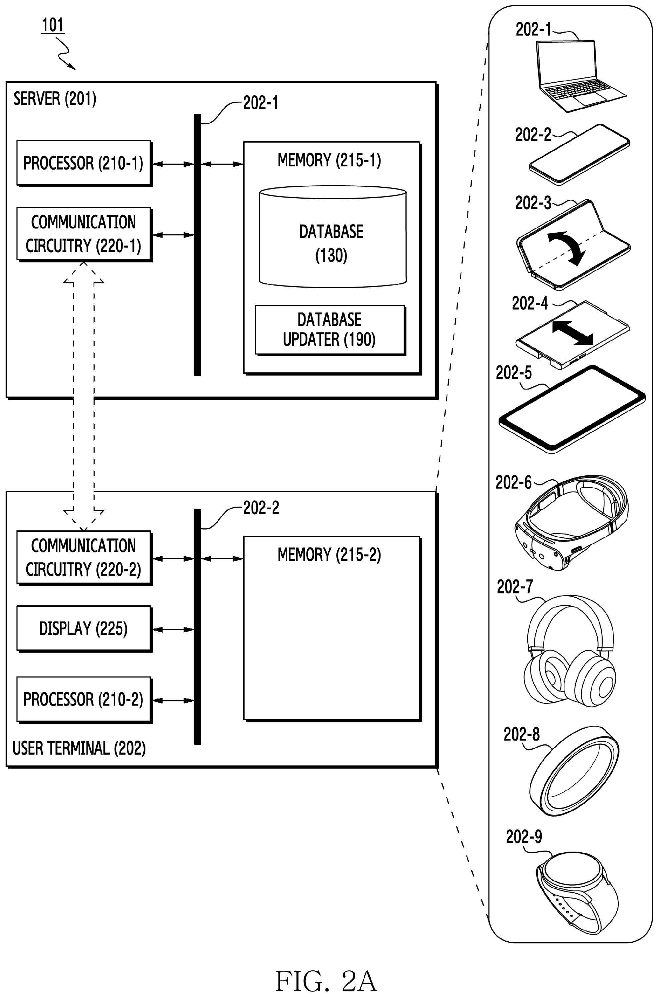

Referring to FIG. 1, a system 101 executing one or more software applications is illustrated. The system 101 may include at least one electronic device. For example, the system 101 may include a stand-alone electronic device, or may include a plurality of electronic devices connected through a network (e.g., Internet). In an embodiment including a plurality of electronic devices, the system 101 may include a first electronic device referred to as a server, and a second electronic device referred to as a user terminal (or user equipment). One or more electronic devices included in the system 101 are exemplarily described with reference to FIGS. 2A to 2B. Hereinafter, an operation performed by the system 101 (or a function executed by the system 101) may mean that the operation (or the function) is performed by at least one electronic device included in the system 101.

In an embodiment, the system 101 may perform an operation for interacting with a user 110 using natural language. Referring to FIG. 1, an exemplary case of the system 101 receiving an exemplary natural language sentence 120 (e.g., "How to create an invention?") from the user 110 is illustrated. An embodiment is not limited thereto, and the system 101 may receive a plurality of natural language sentences from the user 110. The natural language sentence 120 inputted by the user 110 may be referred to as a query sentence and/or a prompt sentence. The user 110 may input the natural language sentence 120 to obtain information based on facts and/or theories from the system 101. For example, an input of the user 110 for providing the natural language sentence 120 to the system 101 may include a request for generating another natural language sentence with respect to the natural language sentence 120. The natural language sentence 120 may be received or detected through an utterance of the user 110 and/or a keyboard (e.g., a software keyboard).

The system 101 having received the natural language sentence 120 may obtain information 140 associated with the natural language sentence 120 by using a database 130. Information inputted to the system 101 or detected by the system 101 may be accumulated or stored in the database 130. Referring to FIG. 1, the system 101 may obtain the information 140 associated with the natural language sentence 120 in the database 130 by performing a search on the database 130. The information 140 may correspond to at least a portion of information stored in the database 130. By using a response message generator 150 into which the information 140 and the natural language sentence 120 are inputted, the system 101 may generate or obtain a response message 160 including one or more natural language sentences to be provided to the user 110. The response message generator 150, which is a software application executed by the system 101, may include a software application for driving a computational model referred to as a neural network.

For example, the neural network may mean a computational model that mimics computational ability of an animal (or a human) using a large number of artificial neurons (or nodes). In order to perform computations represented by the neural network, the system 101 may include a central processing unit (CPU), a graphic processing unit (GPU), a neural processing unit (NPU), or a combination thereof. By using the neural network, the system 101 may mimic human cognitive functions or learning processes. Performance of the neural network may be improved by a process referred to as training (or machine-learning). The process may be associated with algorithms such as gradient descent and/or backpropagation. In an embodiment, the response message generator 150 may include a neural network trained to generate information (e.g., the response message 160) that is difficult to determine as an output of artificial intelligence, such as generative artificial intelligence.

Referring to FIG. 1, the system 101 may provide the user 110 with the response message 160 including a plurality of natural language sentences (e.g., "An invention is a unique or novel device, method, composition, idea or process. To create the invention, look around and find a problem."). For example, the response message 160 may be included in a user interface (UI) visualized by an electronic device included in the system 101. For example, the response message 160 may be included in an audio signal outputted from an electronic device included in the system 101. By using the response message 160 including the natural language sentences, the system 101 may provide the user 110 with a user experience similar to conversing with another user.

Referring to FIG. 1, the system 101 driving the neural network trained to generate the response message 160 may manage the database 130 separable from the neural network. The database 130 may be referred to as an external database in terms of being managed by a software application separated from the neural network. The database 130 may be referred to as a knowledge database in terms of providing information required for operation of the neural network. A structure that generates one or more natural language sentences using a knowledge database separated from the neural network, such as the database 130 and the response message generator 150, may be referred to as a retrieval-augmented generation (RAG) pattern.

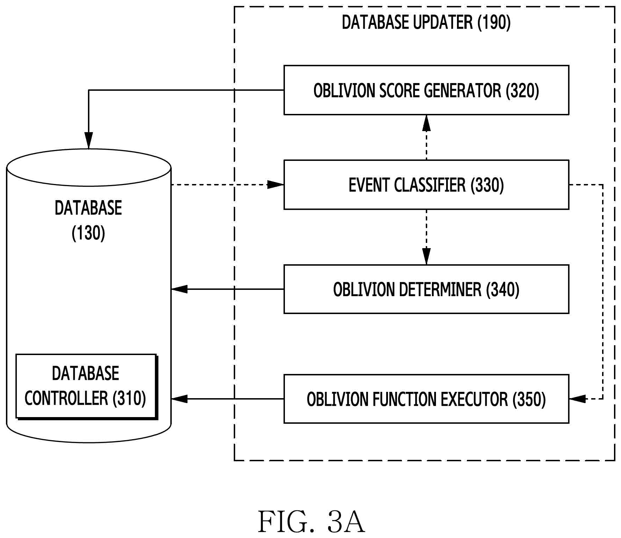

Referring to FIG. 1, different software applications installed in at least one electronic device included in the system 101 for managing the database 130 are illustrated. For example, a data preprocessor 180 configured to add information to the database 130 may be installed in at least one electronic device in the system 101. For example, the response message generator 150 configured to generate the response message 160 for a question of the user 110 (e.g., the natural language sentence 120) by using at least a portion of information included in the database 130 (in the exemplary case of FIG. 1, the information 140) may be installed in at least one electronic device in the system 101. For example, a database updater 190 configured to change (or update) and/or delete at least a portion of information stored in the database 130 may be installed in at least one electronic device in the system 101. An exemplary operation of at least one electronic device in the system 101 executing the database updater 190 is described with reference to FIGS. 3A to 3B.

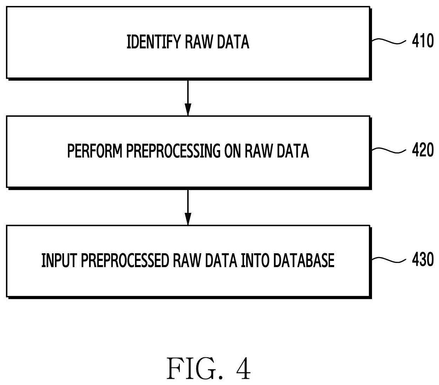

By using the database 130 separated from the neural network for generating a natural language sentence, the system 101 may improve quality (e.g., accuracy and/or quantity) of the response message 160 generated by the system 101, only by updating the database 130 without training the neural network. For example, the system 101 may periodically or repeatedly store raw data 170 (e.g., a memo, an email, an image, a video, and/or a sound collected from the Internet or preset by a user) in the database 130. In order to store the raw data 170 in the database 130, the system 101 may execute a software application such as the data preprocessor 180. Based on execution of the data preprocessor 180, the system 101 may obtain or generate attributes (or metadata) of the raw data 170 to be stored in the database 130 together with the raw data 170. An exemplary operation of at least one electronic device in the system 101 executing the data preprocessor 180 is described with reference to FIG. 4.

Since the response message generator 150 is trained to output a natural language sentence familiar to a user, a hallucination phenomenon may occur. The hallucination phenomenon may occur when information included in the response message 160 outputted from a neural network (e.g., a neural network of the response message generator 150) is not accurate. In order to reduce the hallucination phenomenon, the system 101 may at least partially include a structure of a RAG pattern.

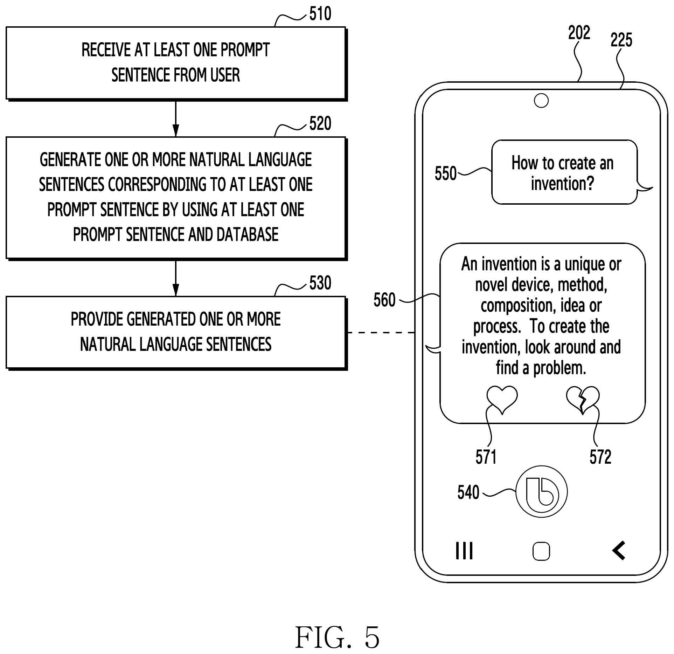

Based on execution of the response message generator 150, an exemplary operation of at least one electronic device in the system 101 responding to an input of the user 110 such as the natural language sentence 120 is described with reference to FIG. 5. In order to prepare for various questions of the user 110, information may be accumulated in the database 130 by the data preprocessor 180 executed by at least one electronic device in the system 101. Since a source of the information (e.g., a creator of the information and/or a network address in which the information is stored) is stored together with the information in the database 130, reliability of the response message 160 may be explicitly evaluated. For example, by using the explicitly evaluated reliability, an operator of the system 101 may perform an operation for reducing the hallucination phenomenon. For example, only by at least partially changing the database 130 without changing the neural network of the response message generator 150, a probability that the hallucination phenomenon occurs may be decreased.

In an embodiment, while at least one electronic device included in the system 101 executes the data preprocessor 180, a size (or capacity) of the database 130 may increase. The system 101 may maintain or reduce the size of the database 130 while maintaining or increasing quality of information stored in the database 130 by executing the database updater 190. For example, by deleting useless information or invalid information among the information stored in the database 130, a probability that the hallucination phenomenon occurs may be reduced or maintained.

Since the quality of the information stored in the database 130 is increased or maintained, the system 101 may improve or maintain the quality of the response message 160 while reducing resources (e.g., storage capacity) for maintaining the database 130. For example, even though an amount of information stored in the database 130 is reduced or maintained, a probability that the hallucination phenomenon occurs may be reduced or maintained.

As described above, according to an embodiment, the system 101 including the database 130 may reduce or maintain the capacity of the database 130 by periodically or repeatedly deleting information from the database 130. The system 101 may determine whether to delete information from the database 130 by executing the database updater 190. Whether to delete information from the database 130 may be determined using a numerical value (e.g., a score) computed using one or more attributes of the information. Before deleting information from the database 130, the system 101 may check with the user 110 of the system 101 whether to maintain the information. When receiving an input for maintaining the information from the user 110, the system 101 may maintain the information without deleting it from the database 130. By using the input of the user 110 and/or the one or more attributes with respect to the information, the system 101 may reduce resources occupied by the database 130 while maintaining the quality of the response message 160 generated using the database 130.

Hereinafter, at least one electronic device included in the system 101 is exemplarily described with reference to FIGS. 2A to 2B.

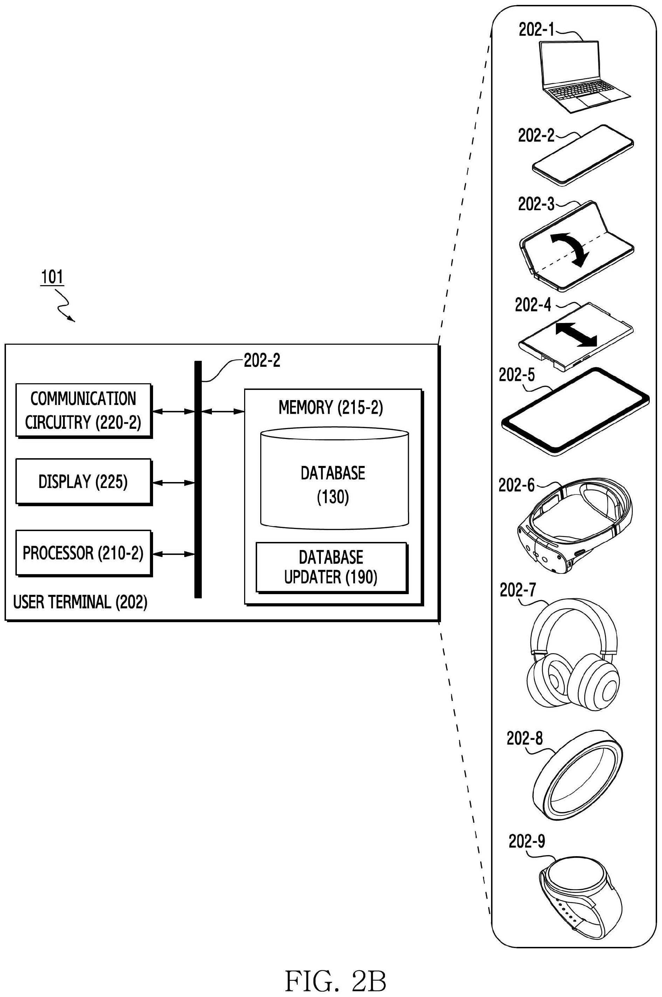

FIGS. 2A and 2B illustrate examples of a system 101 for generating a natural language sentence. The system 101 of FIG. 1 may include at least one electronic device described with reference to FIGS. 2A and/or 2B.

Referring to FIG. 2A, according to an embodiment, the system 101 may include, as electronic devices, a server 201 and a user terminal 202. The server 201 and the user terminal 202 may be referred to or referenced as an electronic device. Although one user terminal 202 is illustrated, the server 201 may communicate with a plurality of user terminals substantially simultaneously. Referring to FIG. 2B, the system 101 may include the user terminal 202 alone.

Referring to FIGS. 2A and/or 2B, exemplary appearances of the user terminal 202 are illustrated. The user terminal 202 may have various types of form factors, such as a laptop personal computer (PC) 202-1, smartphones (e.g., a bar-type smartphone 202-2, a foldable-type smartphone 202-3, or a slidable (or rollable) type smartphone 202-4), a tablet PC 202-5, a head-mounted display (HMD) device 202-6, a headset 202-7 (or a headphone), a ring 202-8, a watch 202-9, and other similar computing devices (not illustrated). The user terminal 202 may be referred to as an electronic device, a mobile device, a user equipment (UE), a multi-function device, a portable communication device, and/or a portable device. The form factor of the user terminal 202 is not limited to the exemplary form factors illustrated in FIGS. 2A and/or 2B. For example, the user terminal 202 may be included as an electronic control unit (ECU) in a vehicle (e.g., an electric vehicle (EV)). For example, the user terminal 202 may have a wearable form factor that may be worn by a user, such as the headset 202-7, the ring 202-8, and/or the watch 202-9, having an appearance of a watch, or may have an implantable form factor that may be implanted into a body part of a user. An embodiment is not limited thereto, and the user terminal 202 may have a form factor of an earbud and/or an earphone.

Referring to FIG. 2A, according to an embodiment, the server 201 of the system 101 may include at least one of a processor 210-1, memory 215-1, or communication circuitry 220-1. The processor 210-1, the memory 215-1, and the communication circuitry 220-1 may be electronically and/or operably coupled with each other by an electronical component such as a communication bus 202-1. Hereinafter, electronical components being operably coupled may mean that a direct connection or an indirect connection between the electronical components is established by wire or wirelessly such that a second electronical component is controlled by a first electronical component among the electronical components. Although illustrated based on different blocks, an embodiment is not limited thereto, and a portion of the electronical components of FIG. 2A (e.g., at least a portion of the processor 210-1, the memory 215-1, and the communication circuitry 220-1) may be included in a single integrated circuit such as a system on a chip (SoC). A type and/or the number of electronical components included in the server 201 are not limited to those illustrated in FIG. 2A. For example, the server 201 may include only some of the electronical components illustrated in FIG. 2A. One or more clusters in which a plurality of electronic devices are grouped may be referred to as the server 201.

Referring to FIGS. 2A and/or 2B, according to an embodiment, the user terminal 202 may include at least one of a processor 210-2, memory 215-2, communication circuitry 220-2, or a display 225. Similar to the server 201, the processor 210-2, the memory 215-2, and the communication circuitry 220-2 may be electronically and/or operably coupled with each other by an electronical component such as a communication bus 202-2. In the present disclosure, among descriptions of the processor 210-2, the memory 215-2, and the communication circuitry 220-2 of the user terminal 202, descriptions overlapping with each of the processor 210-1, the memory 215-1, and the communication circuitry 220-1 of the server 201 may be omitted.

A processor (e.g., the processors 210-1 and 210-2) of an electronic device (e.g., the server 201 and/or the user terminal 202) according to an embodiment may include a circuit for processing data (e.g., a processing circuit) based on one or more instructions. The circuit for processing data may include, for example, an arithmetic and logic unit (ALU), a floating point unit (FPU), a field programmable gate array (FPGA), a central processing unit (CPU), a graphic processing unit (GPU), a neural processing unit (NPU), and/or an application processor (AP). For example, the number of processors may be one or more. A processing circuit of a processor that loads (or fetches) an instruction and performs a computation corresponding to the loaded instruction may be referred to or referenced as a core circuit (or a core). For example, the processor may have a structure of a multi-core processor including a plurality of core circuits, such as a dual core, a quad core, a hexa core, or an octa core. Functions and/or operations described with reference to the present disclosure may be collectively performed by one or more processing circuits included in the processor.

According to an embodiment, memory (e.g., the memory 215-1 and 215-2) of an electronic device (e.g., the server 201 and/or the user terminal 202) may include circuitry for storing data and/or instructions inputted to and/or outputted from a processor (e.g., the processors 210-1 and 210-2). The memory may include, for example, a volatile memory such as a random-access memory (RAM) and/or a non-volatile memory such as a read-only memory (ROM). The non-volatile memory may be referred to as storage. The volatile memory may include, for example, at least one of a dynamic RAM (DRAM), a static RAM (SRAM), a Cache RAM, or a pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disk, a solid state drive (SSD), or an embedded multimedia card (eMMC). The processor of the electronic device may execute instructions of the memory in the electronic device and perform functions and/or operations represented by the instructions.

According to an embodiment, communication circuitry (e.g., the communication circuitry 220-1 and 220-2) of an electronic device (e.g., the server 201 and/or the user terminal 202) may include hardware for supporting transmission and/or reception of an electrical signal between the electronic device and an external electronic device. The communication circuitry may include, for example, at least one of a modulator and demodulator (MODEM), an antenna, or an optic/electronic (O/E) converter. The communication circuitry may support transmission and/or reception of an electrical signal based on various types of protocols such as Ethernet, a local area network (LAN), a wide area network (WAN), wireless fidelity (WiFi), near field communication (NFC), Bluetooth, bluetooth low energy (BLE), ZigBee, long term evolution (LTE), fifth generation (5G) new radio (NR), sixth generation (6G), and/or above-6G.

Referring to FIGS. 2A and/or 2B, the user terminal 202 may further include the display 225. An embodiment is not limited thereto, and the display 225 may be omitted according to a form factor of the user terminal 202. The display 225 of an electronic device (e.g., the server 201 and/or the user terminal 202) may output visualized information to a user. For example, the display 225 may output visualized information to the user by being controlled by a controller such as a graphic processing unit (GPU) and/or the processor 210-2. The display 225 may include a liquid crystal display (LCD), a plasma display panel (PDP), and/or one or more light emitting diodes (LEDs). The LED may include an organic LED (OLED). The display 225 may include a flat panel display (FPD) and/or electronic paper. An embodiment is not limited thereto, and the display 225 may have a shape that is at least partially curved or a deformable shape. The display 225 having a deformable shape may be referred to as a flexible display.

In an embodiment, the user terminal 202 may include a sensor (e.g., a touch sensor panel (TSP)) for detecting an external object (e.g., a finger of a user) on the display 225. For example, by using the TSP, the user terminal 202 may detect an external object contacting the display 225 or floating above the display 225. In response to detecting the external object, the user terminal 202 may execute a function associated with a specific visual object corresponding to a position of the external object on the display 225 among visual objects being displayed in the display 225.

Although not illustrated, according to an embodiment, the user terminal 202 may include an output means for outputting information in a form other than a visualized form. For example, the user terminal 202 may include a speaker for outputting an acoustic signal. For example, the user terminal 202 may include a motor for providing haptic feedback based on vibration.

In an embodiment, in memory (e.g., the memory 215-1 and 215-2) of an electronic device (e.g., the server 201 and/or the user terminal 202), one or more instructions (or commands) representing computations and/or operations to be performed on data by a processor (e.g., the processors 210-1 and 210-2) may be stored. A set of one or more instructions may be referred to as firmware, an operating system, a process, a routine, a sub-routine, a program, and/or a software application (hereinafter, an application). For example, the electronic device and/or the processor may perform at least one of operations of FIGS. 4 to 7 when a set of a plurality of instructions distributed in a form of an operating system, firmware, a driver, and/or an application is executed. Hereinafter, that an application is installed in an electronic device may mean that one or more instructions provided in a form of an application are stored in the memory of the electronic device, and that the one or more applications are stored in a format (e.g., a file having an extension preset by an operating system of the electronic device) executable by the processor of the electronic device.

Referring to FIG. 2A, the database 130 and the database updater 190 installed in the memory 215-1 of the server 201 are exemplarily illustrated. The data preprocessor 180 of FIG. 1 may be installed in the memory 215-1 of the server 201. In an embodiment of FIG. 2A, the response message generator 150 of FIG. 1 may be installed in the memory 215-2 of the user terminal 202. Referring to FIG. 2B, the database 130 and the database updater 190 may be installed in a single user terminal 202. The data preprocessor 180 of FIG. 1 and/or the response message generator 150 of FIG. 1 may be further installed in the user terminal 202 of FIG. 2B.

In an embodiment, a database (DB) 130 may include at least one of a set of systematized information to be shared among independent applications executed in an electronic device (e.g., the server 201 and/or the user terminal 202) and/or among a plurality of electronic devices including the electronic device, or one or more applications managing the information. In the set of the information, different information may be combined with each other based on units such as a type, a column, a record, and/or a table. A combination of information may be used for addition, deletion, updating, and search of information in the database 130. For example, when the electronic device is in a state of searching for information of a preset condition, the electronic device may further identify information satisfying the condition and other information (e.g., attributes) combined with the information by using the database 130.

In an embodiment, information stored in the database 130 may be used to generate a response message for a question of a user based on natural language. In an embodiment of FIG. 2A, the processor 210-2 of the user terminal 202 may transmit, to the server 201, at least one prompt sentence detected based on a touch input (or an audio input including an utterance) on the display 225, by controlling the communication circuitry 220-2. The processor 210-1 of the server 201 may receive at least one prompt sentence from the user terminal 202 through the communication circuitry 220-1. The processor 210-1 may generate a response message corresponding to the received at least one prompt sentence by using the database 130 stored in the memory 215-1 (or storage). The processor 210-1 may transmit information used to display the generated response message to the user terminal 202 through the communication circuitry 220-1. In response to the information received through the communication circuitry 220-2, the processor 210-2 of the user terminal 202 may control the display 225 to display at least a portion of the information, or may output an audio signal representing at least a portion of the information through the speaker.

In an embodiment of FIG. 2B, the processor 210-2 of the user terminal 202 may detect a request for generating a natural language sentence for at least one prompt sentence based on a touch input (or an audio input including an utterance) on the display 225. The processor 210-2 may generate a response message corresponding to the at least one prompt sentence by using the database 130 in which information is accumulated, in response to the request. The processor 210-2 may control the display 225 to display the generated response message. In an embodiment of FIG. 2B in which the database 130 is stored in the user terminal 202, since the memory 215-2 of the user terminal 202 has a finite size, the size of the database 130 may also be required to be maintained within a range less than or equal to the size of the memory 215-2.

In an embodiment, in order to adjust the size of the database 130, information stored in the database 130 may include one or more attributes used to determine whether to delete the information. For example, a record corresponding to specific information in the database 130 may include at least one of exemplary attributes of Table 1.

**[Table 1]**

| Attribute | Description |
|---|---|
| Identifier | A value for distinguishing information in the database 130 (e.g., a primary key and/or an index value) |
| Vector | A vector corresponding to information, determined using vectorization with respect to a vector space associated with meaning and/or similarity |
| Score | A numerical value corresponding to information, computed based on execution of the database updater 190 |
| Tag (or label) | A flag value (e.g., a boolean value) indicating whether an input for blocking deletion of information has been received |
| Information incoming time | A timestamp indicating a moment when information is stored in the database 130 |
| Information outcoming time | A timestamp indicating a moment when information is loaded (or fetched) from the database 130 for generating a response message |
| Information outcoming frequency | A numerical value indicating a frequency at which information is loaded from the database 130 for generating a response message (e.g., the number of times the information is loaded from the database 130 within a time interval of a preset size) |
| Information update frequency | A numerical value indicating a frequency at which information is updated |
| Positive feedback | Data indicating the number of times positive feedback is received for a response message generated using information |
| Negative feedback | Data indicating the number of times negative feedback is received for a response message generated using information |
| Size | A size of information (e.g., a numerical value expressed in bytes) |

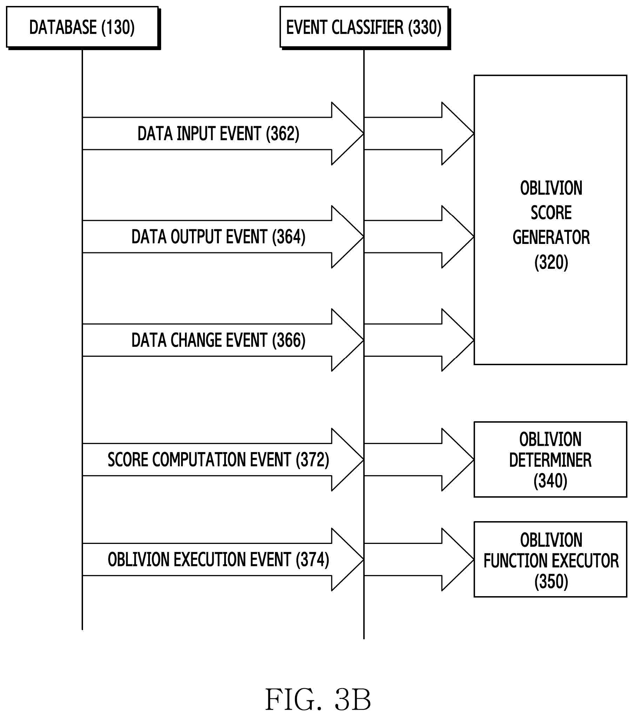

Referring to Table 1, the vector may include a plurality of elements associated with meaning and/or similarity of a natural language sentence included in the information of Table 1. Referring to Table 1, the score may indicate whether to delete information corresponding to the score. Referring to Table 1, the tag may indicate whether an input for prohibiting deletion of information corresponding to the tag is received. At least one of the attributes of Table 1 may be adjusted based on execution of the database updater 190. Hereinafter, an exemplary operation in which at least one attribute of the database 130 is changed based on execution of the database updater 190 is described with reference to FIGS. 3A and/or 3B.

FIGS. 3A and 3B illustrate exemplary operations of a database updater 190 executed to manage a database 130. The system 101 of FIG. 1 and/or the electronic device (e.g., the server 201 and/or the user terminal 202) described with reference to FIGS. 2A to 2B may perform operations described with reference to FIG. 3A and/or FIG. 3B. The database 130 and the database updater 190 of FIG. 1 may include the database 130 and the database updater 190 of FIG. 3A and/or FIG. 3B.

Referring to FIG. 3A, according to an embodiment, the database updater 190 executed by the electronic device may include at least one of a oblivion score generator 320, an event classifier 330, a oblivion determiner 340, and/or a oblivion function executor 350, according to supported functions and/or sub-routines. By executing the database updater 190, the electronic device may delete at least a portion of information stored in the database 130.

The event classifier 330 may be executed to detect an event generated by a database controller 310 and associated with the database 130. The electronic device executing the event classifier 330 may invoke (and/or call) at least one of different sub-routines and/or processes (e.g., the oblivion score generator 320, the oblivion determiner 340, and/or the oblivion function executor 350) included in the database updater 190 by using the detected event.

For example, when an event of adding or updating information of the database 130 occurs, the electronic device executing the database controller 310 of the database 130 may execute the event classifier 330 by using the detected event. For example, the electronic device detecting at least one of an incoming event for adding information to the database 130, an outcoming event for outputting information from the database 130, and/or an update event for updating information of the database 130 may execute the event classifier 330.

Based on execution of the event classifier 330, the electronic device may invoke or execute other sub-routines and/or processes included in the database updater 190. For example, the electronic device detecting an incoming event, an outcoming event, and/or an update event may execute the oblivion score generator 320. The electronic device executing the oblivion score generator 320 may adjust at least one of attributes of information stored in the database 130, or may compute or determine a score (e.g., a oblivion score) indicating whether to delete the information by using the attributes. The score of Table 1 may be an example of the score computed to indicate whether to delete the information. The electronic device executing the oblivion score generator 320 may change, in a record corresponding to specific information of the database, not only the score but also one or more attributes used to compute the score (e.g., at least one of an information incoming time, an information outcoming time, an information outcoming frequency, an information update frequency, feedback data, and/or a size).

In an embodiment, a score assigned to information of the database 130 based on execution of the oblivion score generator 320 may indicate a rate and/or a period at which the information is deleted from the database 130. For example, as the score increases, a probability that information corresponding to the score is deleted from the database 130 may increase. In order to compute the score by using attributes associated with the information (e.g., the attributes of Table 1), the oblivion score generator 320 may include instructions representing a function associated with at least one of the attributes. An embodiment is not limited thereto, and the oblivion score generator 320 may be configured to use a neural network trained to compute a score from attributes corresponding to information.

In an embodiment, in a state executing the database controller 310 of the database 130, the electronic device may generate an event for triggering a specific function (e.g., the oblivion determiner 340 and/or the oblivion function executor 350) of the database updater 190. The event may be generated at a moment scheduled by the database controller 310 (e.g., a plurality of moments having a preset period). The electronic device executing the database controller 310 may determine whether to generate the event by using a state of the electronic device executing the database updater 190 (e.g., at least one of a state of charge (SOC) and temperature of a battery included in the electronic device, and/or a capacity of memory included in the electronic device). For example, when the SOC of the battery of the electronic device is less than a preset SOC, or when the electronic device is in a preset state for limiting power consumption, such as a low-power state, the electronic device may refrain from generating the event. For example, when an available space of a non-volatile memory (e.g., the memory 215-2 of FIG. 2A) of the electronic device is reduced to less than a preset threshold, the electronic device may generate the event. For example, when a size of the database 130 exceeds a preset threshold, the electronic device may generate the event.

The electronic device detecting an event associated with the oblivion determiner 340 by using the event classifier 330 may execute the oblivion determiner 340. The oblivion determiner 340 may determine whether to delete information stored in the database 130. In a state in which the oblivion determiner 340 is executed, the electronic device may extract information to be deleted from the database 130, by comparing scores included in all records of the database 130 with a preset threshold,. For example, information associated with a record including a score exceeding the preset threshold may be determined as information to be deleted from the database 130 by the electronic device executing the oblivion determiner 340. In the example, the electronic device may assign, to the record, a preset attribute (or a preset value) indicating deletion of information.

The electronic device detecting an event associated with the oblivion function executor 350 by using the event classifier 330 may execute the oblivion function executor 350. In a state in which the oblivion function executor 350 is executed, the electronic device may search, among all records of the database 130, for one or more records having a preset attribute (e.g., a preset attribute indicating deletion of information) assigned based on execution of the oblivion determiner 340. The electronic device may delete information corresponding to the one or more searched records from the database 130. Together with the deletion of the information, the electronic device may delete a record corresponding to the deleted information from the database 130.

As described above, any one of different functions of the database updater 190 may be selectively executed by using the event classifier 330. The event classifier 330 may route an event generated by the database controller 310 to different processes of the database updater 190 (e.g., a process corresponding to each of the oblivion score generator 320, the oblivion determiner 340, and/or the oblivion function executor 350).

Referring to FIG. 3B, operations performed by the electronic device detecting different events are described. The electronic device identifying a query for storing data in the database 130 (e.g., a string having a format of structured query language (SQL)) may generate a data input event 362 based on execution of the database controller 310. The electronic device detecting the data input event 362 based on execution of the event classifier 330 may set attributes of data corresponding to the query (e.g., the information incoming moment, the identifier, the vector, and/or the size of Table 1) by using the oblivion score generator 320.

For example, the electronic device identifying a query for searching for information of the database 130 may generate a data output event 364 based on execution of the database controller 310. The electronic device detecting the data output event 364 based on execution of the event classifier 330 may set or change an attribute of information corresponding to the query (e.g., the information outcoming moment and/or the information update frequency of Table 1) by using the oblivion score generator 320.

For example, the electronic device identifying a query for updating information of the database 130 may generate a data change event 366 based on execution of the database controller 310. The electronic device detecting the data change event 366 based on execution of the event classifier 330 may set or change an attribute of information corresponding to the query (e.g., the information update frequency of Table 1) by using the oblivion score generator 320.

For example, the electronic device identifying a schedule event reserved to compute a score indicating whether to delete information may generate a score computation event 372 based on execution of the database controller 310. In response to occurrence of the score computation event 372 detected by using the event classifier 330, the electronic device may execute the oblivion determiner 340. In a state in which the oblivion determiner 340 is executed, the electronic device may compute or determine a score of information stored in the database by using at least one of attributes associated with the information (e.g., the attributes of Table 1). The score computation event 372 may be periodically generated or repeatedly generated by the database controller 310.

For example, the electronic device identifying another schedule event reserved to delete information from the database 130 may generate a oblivion execution event 374 based on execution of the database controller 310. In response to occurrence of the oblivion execution event 374, the electronic device may execute the oblivion function executor 350. While the oblivion function executor 350 is executed, the electronic device may detect, among records of the database 130, a record having a score exceeding a score preset by the oblivion determiner 340.

The electronic device detecting at least one record having a score exceeding a preset score may delete the at least one record and/or information corresponding to the at least one record from the database 130. By deleting at least a portion of information stored in the database 130 by using the oblivion function executor 350, the electronic device may reduce the size of the database 130. The oblivion execution event 374 may occur at a moment linked to a moment at which the score computation event 372 occurs. The oblivion execution event 374 may be periodically or repeatedly generated by the database controller 310.

FIG. 4 illustrates an exemplary operation of an electronic device (e.g., the server 201 and/or the user terminal 202 of FIG. 2A and/or FIG. 2B) inputting information into a database (e.g., the database 130 of FIG. 1) provided for generation of a natural language sentence. In the following embodiments, each of operations may be performed sequentially, but is not necessarily performed sequentially. For example, an order of each of the operations may be changed, and at least two operations may be performed in parallel. According to an embodiment, a processor of the electronic device (e.g., at least one of the processors 210-1 and 210-2 of FIG. 2A and/or FIG. 2B) may perform the operations described with reference to FIG. 4. The operations described with reference to FIG. 4 may be performed based on execution of the data preprocessor 180 of FIG. 1.

Referring to FIG. 4, in operation 410, according to an embodiment, the processor of the electronic device may identify raw data (e.g., the raw data 170 of FIG. 1). The raw data of operation 410 may be obtained by an electronic device that executes a software application (e.g., a crawler) for obtaining information from the Internet. The raw data of operation 410 may include text based on natural language, such as a document file. The raw data of operation 410 may include natural language represented by an image and/or a video. The raw data of operation 410 may include natural language extracted from an audio signal based on speech-to-text (STT).

Referring to FIG. 4, in operation 420, according to an embodiment, the processor of the electronic device may perform preprocessing on the raw data. The preprocessing may include an operation of obtaining information associated with natural language (or text) included in the raw data. For example, the electronic device may compute or determine elements of a vector in a vector space associated with the natural language included in the raw data by performing vectorization on the raw data of operation 410. In order to generate a record corresponding to the raw data in the database, the preprocessing may include an operation of determining one or more attributes to be included in the record.

Referring to FIG. 4, in operation 430, according to an embodiment, the processor of the electronic device may input the preprocessed raw data into the database. The electronic device performing operation 430 may add or insert the record corresponding to the raw data of operation 410 into the database. Based on operation 430, the record including exemplary the attributes of Table 1 and linked with the raw data of operation 410 may be generated in the database. The record may include an information incoming time indicating a moment when the raw data is added based on operation 430. The record may include an attribute determined based on the preprocessing of operation 420.

The operations described with reference to FIG. 4 may be performed periodically (or continuously) to manage the database. By using the database managed based on the operations of FIG. 4, the electronic device may generate a response message corresponding to a natural language sentence (e.g., a prompt sentence) received from a user. Hereinafter, with reference to FIG. 5, an exemplary operation of generating a response message by an electronic device and/or a system including the electronic device according to an embodiment will be described.

FIG. 5 illustrates an exemplary operation of an electronic device (e.g., the server 201 and/or the user terminal 202 of FIG. 2A and/or FIG. 2B) displaying one or more natural language sentences corresponding to a user input. In the following embodiments, each of operations may be performed sequentially, but is not necessarily performed sequentially. For example, an order of each of the operations may be changed, and at least two operations may be performed in parallel. According to an embodiment, a processor of the electronic device (e.g., at least one of the processors 210-1 and 210-2 of FIG. 2A and/or FIG. 2B) may perform the operations described with reference to FIG. 5. The operations described with reference to FIG. 5 may be performed based on execution of the response message generator 150 of FIG. 1.

Referring to FIG. 5, in operation 510, according to an embodiment, the processor of the electronic device may receive at least one prompt sentence from a user (e.g., the user 110 of FIG. 1). For example, by using a software keyboard displayed on the display 225 of FIG. 2A and/or FIG. 2B, the electronic device may obtain at least one prompt sentence from the user. For example, by using an audio signal received through a microphone of the user terminal 202 of FIG. 2A and/or FIG. 2B, the electronic device may detect an utterance of the user including at least one prompt sentence.

Referring to FIG. 5, in operation 520, according to an embodiment, the processor of the electronic device may generate one or more natural language sentences corresponding to the at least one prompt sentence by using the at least one prompt sentence in operation 510 and a database (e.g., the database 130 of FIG. 1). For example, by using a neural network trained to refer to information stored in the database of operation 520, the electronic device may generate a response message (e.g., the response message 160 of FIG. 1) corresponding to the at least one prompt sentence of operation 510.

For example, the electronic device may obtain information associated with the at least one prompt sentence from the database by using the at least one prompt sentence of operation 510. Instead of inputting entire information of the database into the neural network, the electronic device may (selectively) input information in the database associated with the at least one prompt sentence into the neural network. When generating the response message of operation 520, the electronic device may change an attribute in the database corresponding to information associated with the response message (e.g., information used to generate the response message). For example, the electronic device may update at least one of the information outcoming moment and/or the information update frequency of Table 1. In the example, since the information is retrieved from the database, the information update frequency may be increased, and the information outcoming moment may be updated to a current moment (or a last moment when the information is retrieved from the database).

Referring to FIG. 5, in operation 530, according to an embodiment, the processor of the electronic device may provide the generated one or more natural language sentences. The electronic device may generate or output an audio signal including an utterance representing the one or more natural language sentences of operation 530 by performing text-to-speech (TTS). When the electronic device of FIG. 5 is the server 201 of FIG. 2A, the electronic device may transmit the audio signal to the user terminal 202 of FIG. 2A. When the electronic device of FIG. 5 is the user terminal 202 of FIG. 2A and/or FIG. 2B, the electronic device may output the audio signal through a speaker. The one or more natural language sentences of operation 530 may be referred to as a response message (e.g., the response message 160 of FIG. 1).

Referring to FIG. 5, a user terminal 202, which is an exemplary electronic device performing operation 530, is illustrated. The user terminal 202 may display a screen including the response message on the display 225. Referring to FIG. 5, the user terminal 202 may display a visual object 550 including the at least one prompt sentence of operation 510. In the exemplary screen of FIG. 5, the user terminal 202 may display, along a vertical direction of the display 225, a visual object 560 including the one or more natural language sentences of operation 530 after the visual object 550. The visual objects 550 and 560 may be referred to as bubbles including text based on natural language. The user terminal 202 may display, in the display 225, a visual object 540 for receiving an utterance and/or text from the user. For example, in response to an input (e.g., a click and/or a tap gesture) associated with the visual object 540, the user terminal 202 may activate a microphone to obtain the utterance. By using an audio signal outputted from the activated microphone, the user terminal 202 may receive or detect the at least one prompt sentence.

Referring to FIG. 5, the user terminal 202 may display, in the screen, at least one visual object (e.g., icons 571 and 572) associated with feedback. Although an embodiment in which the icons 571 and 572 for obtaining feedback are displayed within the visual object 560 is illustrated, an embodiment is not limited thereto. In response to an input associated with at least one of the icons 571 and 572, the user terminal 202 may change an attribute (e.g., feedback data of Table 1) of information used to generate the response message included in the visual object 560. For example, in response to an input associated with the icon 571 for receiving positive feedback on the response message, the user terminal 202 may change an attribute of the information associated with the response message such that a probability that the information is removed from the database is decreased. For example, in response to an input associated with the icon 572 for receiving negative feedback on the response message, the user terminal 202 may change an attribute of the information associated with the response message such that a probability that the information is removed from the database is increased.

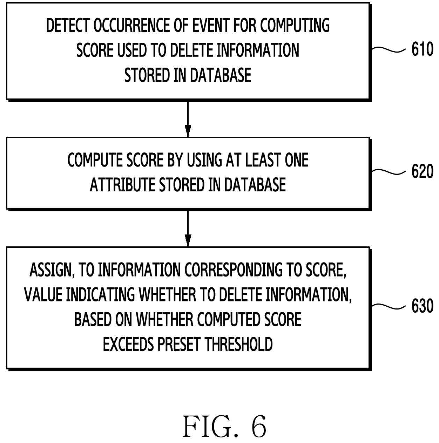

As described above, according to an embodiment, the electronic device may generate or output a response message corresponding to a natural language input of a user by using the database. Hereinafter, with reference to FIG. 6 to FIG. 8, exemplary operations of an electronic device for removing information from the database will be described.

FIG. 6 illustrates an exemplary operation of an electronic device (e.g., the server 201 and/or the user terminal 202 of FIG. 2A and/or FIG. 2B) adjusting an attribute of information stored in a database (e.g., the database 130 of FIG. 1). In the following embodiments, each of operations may be performed sequentially, but is not necessarily performed sequentially. For example, an order of each of the operations may be changed, and at least two operations may be performed in parallel. According to an embodiment, a processor of the electronic device (e.g., at least one of the processors 210-1 and 210-2 of FIG. 2A and/or FIG. 2B) may perform the operations described with reference to FIG. 6. The operations described with reference to FIG. 6 may be performed based on execution of the database updater 190 of FIG. 1.

Referring to FIG. 6, in operation 610, according to an embodiment, the processor of the electronic device may detect occurrence of an event for computing a score (e.g., the score of Table 1) used to delete information stored in the database. The event of operation 610 may be periodically generated based on execution of a program (e.g., the database controller 310 of FIG. 3A and/or FIG. 3B) executed for managing the database. The event of operation 610 may be detected based on execution of the event classifier 330 of FIG. 3A and/or FIG. 3B. For example, operation 610 may be performed by the processor executing the event classifier 330 of FIG. 3A and/or FIG. 3B. The event of operation 610 may include the score computation event 372 of FIG. 3B.

Referring to FIG. 6, in operation 620, according to an embodiment, the processor of the electronic device may compute a score by using at least one attribute stored in the database. The processor may compute a score of each of records stored in the database. The processor may perform operation 620 based on execution of the oblivion score generator 320 of FIG. 3A. The score of operation 620 may be referred to as a oblivion score. With respect to a specific record, the processor may compute the score of operation 620 by using at least one of the information incoming time, the information outcoming time, the information outcoming frequency, the information update frequency, and/or the feedback data of Table 1.

For example, the score of operation 620 may be associated with freshness of the information. For example, the score may have a higher value as a difference between the information incoming time and a current time increases. The score may increase as a period during which the information is stored in the database increases.

For example, the score of operation 620 may be associated with recency of the information. For example, the score may have a higher value as a difference between the information outcoming time and a current time increases. The score may increase as a period between a moment when the information is last retrieved from the database and the current moment increases.

For example, the score of operation 620 may be associated with a frequency at which the information is used. For example, the score may have a higher value as the information outcoming frequency decreases. As the information is more frequently used to generate a response message, the score may decrease.

For example, the score of operation 620 may be associated with whether the information is suitable for long-term storage (e.g., relevance). For example, the score may decrease when a category of the information corresponds to a preset category (e.g., a preset category for classifying information to be stored in the database for a relatively long period).

For example, the score of operation 620 may be associated with volatility of the information. For example, the score may have a higher value as the information update frequency increases. As the information is more stably maintained in the database, the score may decrease.

For example, the score of operation 620 may be associated with usability of the information. For example, the score may have a higher value when feedback data is associated with negative feedback. When negative feedback on a response message generated by using the information is received (e.g., when an input associated with the icon 572 of FIG. 5 is received), the score may increase. When positive feedback on the response message generated by using the information is received (e.g., when an input associated with the icon 571 of FIG. 5 is received), the score may decrease.

For example, the score of operation 620 may be associated with complexity of the information. For example, the score may increase as a size of corresponding information increases (e.g., when having a size exceeding a preset threshold).

The score computed by performing operation 620 may be stored in the database. For example, the score may be stored in a record linked with information corresponding to the score.

Referring to FIG. 6, in operation 630, according to an embodiment, the processor of the electronic device may assign, to information corresponding to the score, a value indicating whether to delete the information, based on whether the computed score exceeds a preset threshold. The value of operation 630 may include a flag value indicating whether to delete the information. The processor may perform operation 630 based on execution of the oblivion determiner 340 of FIG. 3A. The value of operation 630 may be used to display a screen for confirming whether to delete the information when deleting the information by using the oblivion function executor 350 of FIG. 3A.

As described above, according to an embodiment, the electronic device (e.g., the server 201 and/or the user terminal 202 of FIG. 2A to FIG. 2B) may determine whether to delete the database by using at least one attribute of the database. The at least one attribute may include at least one of a first moment when the information is inputted to the database, a second moment when the information is used to generate a response message, a frequency at which the information is used to generate a response message, or feedback data with respect to a response message generated by using the information. The electronic device may compute a score by using at least one of the first moment, the second moment, the frequency, or the feedback data. By comparing a score associated with at least one of the first moment, the second moment, the frequency, or the feedback data with a preset threshold, the electronic device may determine whether to display information within the database corresponding to the score on a screen for confirming information to be deleted from the database.

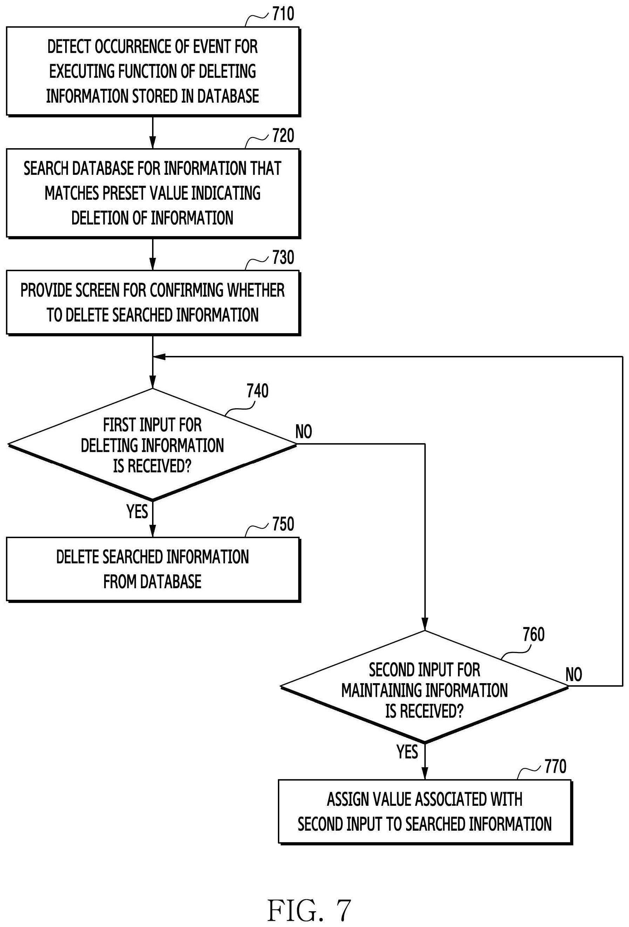

FIG. 7 illustrates an exemplary operation of an electronic device (e.g., the server 201 and/or the user terminal 202 of FIG. 2A and/or FIG. 2B) performed to delete information stored in a database (e.g., the database 130 of FIG. 1). In the following embodiments, each of operations may be performed sequentially, but is not necessarily performed sequentially. For example, an order of each of the operations may be changed, and at least two operations may be performed in parallel. According to an embodiment, a processor of the electronic device (e.g., at least one of the processors 210-1 and 210-2 of FIG. 2A and/or FIG. 2B) may perform the operations described with reference to FIG. 7. The operations described with reference to FIG. 7 may be performed based on execution of the database updater 190 of FIG. 1.

Referring to FIG. 7, in operation 710, according to an embodiment, the processor of the electronic device may detect occurrence of an event for executing a function of deleting information stored in the database. The event of operation 710 may be periodically generated based on execution of a program (e.g., the database controller 310 of FIG. 3A and/or FIG. 3B) executed for managing the database. The event of operation 710 may be detected based on execution of the event classifier 330 of FIG. 3A and/or FIG. 3B. For example, operation 710 may be performed by the processor executing the event classifier 330 of FIG. 3A and/or FIG. 3B. The event of operation 710 may include the oblivion execution event 374 of FIG. 3B.

Referring to FIG. 7, in operation 720, according to an embodiment, the processor of the electronic device may search the database for information that matches a preset value indicating deletion of the information. The preset value of operation 720 may include a value indicating whether to delete the information of operation 630 of FIG. 6. The processor may search the database for information having a score exceeding a preset threshold. In operation 720, the processor may search for information suitable to be deleted from the database by using at least one attribute of the database. In an embodiment, the processor may perform operation 720 to display a screen for confirming the information to be deleted from the database. By using the at least one attribute of the database, the processor may determine at least a portion of the information in the database to be displayed on the screen.

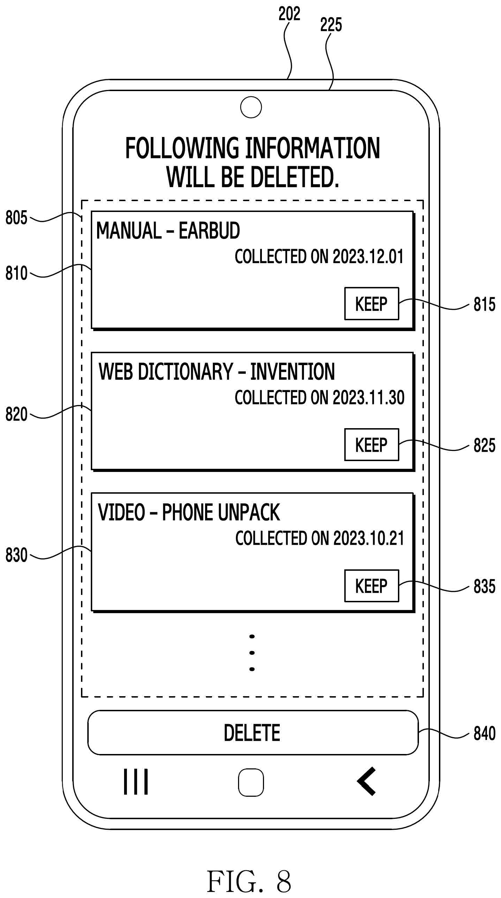

Referring to FIG. 7, in operation 730, according to an embodiment, the processor of the electronic device may provide a screen for confirming whether to delete the information searched based on operation 720. When the event of FIG. 7 is detected at a moment reserved to adjust a size of the database, in operation 730, the processor may control a display (e.g., the display 225 of FIG. 2A and/or FIG. 2B) to display the screen. An exemplary operation in which the processor controls the display to display the screen of operation 730 will be described with reference to FIG. 8.

Referring to FIG. 7, while providing the screen of operation 730, in operation 740, according to an embodiment, the processor of the electronic device may identify or determine whether a first input for deleting the information is received. The first input may be linked with a visual object included in the screen. Based on receiving the first input (740-YES), the processor may perform operation 750. Before receiving the first input, or when the first input is not received (740-NO), the processor may perform operation 760.

Referring to FIG. 7, in operation 750, according to an embodiment, the processor of the electronic device may delete the information searched based on operation 720 from the database. Since the information is deleted from the database, the size of the database (e.g., a size of data occupying memory) may decrease. As the size of the database decreases, resources of the electronic device required to maintain the database may be reduced. For example, the electronic device may store other information in a free space of memory (e.g., storage) obtained by database having a reduced size.

Referring to FIG. 7, in operation 760, according to an embodiment, the processor of the electronic device may identify or determine whether a second input for maintaining the information is received. The second input may be linked with another visual object different from the visual object linked with the first input in the screen of operation 730. Based on receiving the second input (760-YES), the processor may perform operation 770. In a state in which neither the first input nor the second input is received (760-NO), the processor may maintain providing the screen of operation 730.

Referring to FIG. 7, in operation 770, according to an embodiment, the processor of the electronic device may assign a value associated with the second input to the searched information. For example, the processor may assign the value of operation 770 to the information corresponding to the second input. The value of operation 770, which is a value assigned to an attribute referred to as the tag of Table 1, may be assigned to block deletion of the information. In operation 770, in order to maintain the information corresponding to the second input independently of the deletion in operation 750, the processor may store a preset value for maintaining the information in the database in association with the information. The second input of operation 770 may be referred to as an input for labeling or tagging the information to prevent deletion. A value assigned to specific information based on operation 770 may prevent the specific information from being searched in operation 720 when operation 720 of FIG. 7 is performed again after operation 770.

Hereinafter, with reference to FIG. 8, an exemplary operation of an electronic device providing the screen of operation 730 will be described.

FIG. 8 illustrates an exemplary screen of an electronic device (e.g., the user terminal 202 of FIG. 2A and/or FIG. 2B) displayed while deleting information stored in a database (e.g., the database 130 of FIG. 1). According to an embodiment, a processor of the user terminal (e.g., the processor 210-2 of FIG. 2A and/or FIG. 2B) may perform operations described with reference to FIG. 8. The user terminal 202 and the display 225 of FIG. 2A to FIG. 2B may include a user terminal 202 and a display 225 of FIG. 8. The operations described with reference to FIG. 8 may be performed based on execution of the database updater 190 of FIG. 1. The operations described with reference to FIG. 8 may be associated with the operations of the electronic device described with reference to FIG. 7.

Referring to FIG. 8, an exemplary screen displayed on the display 225 of the user terminal 202 is illustrated. The user terminal 202 may display the screen of FIG. 8 by performing operation 730 of FIG. 7. The user terminal 202 may display the screen of FIG. 8 before deleting information of the database stored in the user terminal 202 or stored in a server (e.g., the server 201 of FIG. 2A and/or FIG. 2B) connected to the user terminal 202.

Referring to FIG. 8, the user terminal 202 may display a screen including a list of information to be deleted from the database. In a scrollable area 805 along a vertical direction of the display 225, the user terminal 202 may display one or more visual objects (e.g., visual objects 810, 820, and 830) representing the information to be deleted from the database. A visual object displayed in the area 805 may be referred to as a card object and/or an item object. In the screen displayed on the display 225, the user terminal 202 may display a visual object 840 for receiving an input (e.g., the first input of operation 740 of FIG. 7) for deleting information associated with the list provided through the screen from the database. Although the visual object 840 having a form of a button including preset text (e.g., "Delete") is exemplarily illustrated, an embodiment is not limited thereto.

In an embodiment, in response to an input (e.g., an input including a click and/or a tap gesture) indicating selection of the visual object 840, the user terminal 202 may delete at least a portion of the information in the database. For example, in an exemplary state in which the screen including the visual objects 810, 820, and 830 corresponding to respective different records of the database is displayed, the user terminal 202 receiving the input may delete the records corresponding to each of the visual objects 810, 820, and 830 from the database.

Referring to FIG. 8, each of the visual objects 810, 820, and 830 corresponding to the respective different records of the database may include text representing (or summarizing) information associated with a corresponding record. For example, the user terminal 202 may display, within the visual object 810 associated with a first record, a name (e.g., "Manual-Earbud") assigned to first information associated with the first record. The user terminal 202 may further display, within the visual object 810, text indicating at least one attribute included in the first record (e.g., an information incoming moment, such as "Collected on 2023.12.01"). The user terminal 202 may display, within the visual object 810, a visual object 815 for receiving an input (e.g., the second input of operation 760 of FIG. 7) for maintaining the first information corresponding to the first record. Although the visual object 815 having a form of a button including preset text (e.g., "Keep") is illustrated, an embodiment is not limited thereto.

Referring to the exemplary screen of FIG. 8, the user terminal 202 may display, within the visual object 820 associated with a second record, a name (e.g., "Web Dictionary-Invention") of second information associated with the second record and text indicating at least one attribute (e.g., an information incoming moment, such as "Collected on 2023.11.30") included in the second record. The user terminal 202 may display, within the visual object 820, a visual object 825 configured to receive an input for maintaining the second information.

Referring to the exemplary screen of FIG. 8, the user terminal 202 may display, within the visual object 830 associated with a third record, a name (e.g., "Video-Phone Unpack") of third information corresponding to the third record, and text indicating at least one attribute (e.g., an information incoming moment, such as "Collected on 2023.10.21") of the third record. The user terminal 202 may display, within the visual object 830, a visual object 835 mapped to an input for maintaining the third information. For example, in the screen of FIG. 8, the user terminal 202 may display at least one visual object (e.g., the visual objects 815, 825, and 835) for receiving an input indicating prohibition of deletion of the information displayed through the screen.

In an embodiment, the first record to the third record corresponding to the visual objects 810, 820, and 830 may have a score exceeding a preset threshold. While displaying the list of information to be deleted from the database by using the visual objects 810, 820, and 830, the user terminal 202 may receive an input for maintaining the information. For example, in response to an input that indicates selecting the visual object 815 (e.g., an input including a click and/or a tap gesture with respect to the visual object 815), the user terminal 202 may set or change an attribute (e.g., the tag of Table 1) of the first record corresponding to the visual object 815. For example, the user terminal 202 may assign, to the attribute of the first record, a preset value for prohibiting deletion of the first information corresponding to the first record. The input that indicates selecting the visual object 815 may be referred to as an input for prohibiting deletion of the first record and/or the first information associated with the visual object 815. In response to the input that indicates selecting the visual object 815, the user terminal 202 may hide and/or remove, in the screen, the visual object 815 and the visual object 810 associated with the first information.

After assigning the preset value for prohibiting deletion of the first information to the first record in response to the input that indicates selecting the visual object 815, the user terminal 202 may maintain the first information in the database until the preset value is removed from the first record. For example, when an input that indicates selecting the visual object 840 is further received, the user terminal 202 may delete the second information and the third information corresponding to the visual objects 820 and 830, excluding the first information.

As described above, a system (e.g., the system 101 of FIG. 1) including a user terminal 202 and/or a server (e.g., the server 201 of FIG. 2A and/or FIG. 2B) configured to respond to a natural language question of a user (e.g., the user 110 of FIG. 1) may be provided. In order to generate a response message (e.g., the response message 160 of FIG. 1) with respect to the natural language question, the system may include a database in which information to be used for generating the response message is accumulated. In order to maintain or improve quality of the response message while maintaining or reducing resources (e.g., a capacity of non-volatile memory and/or a size of the database) occupied by the database, unnecessary information may be periodically deleted from the database.

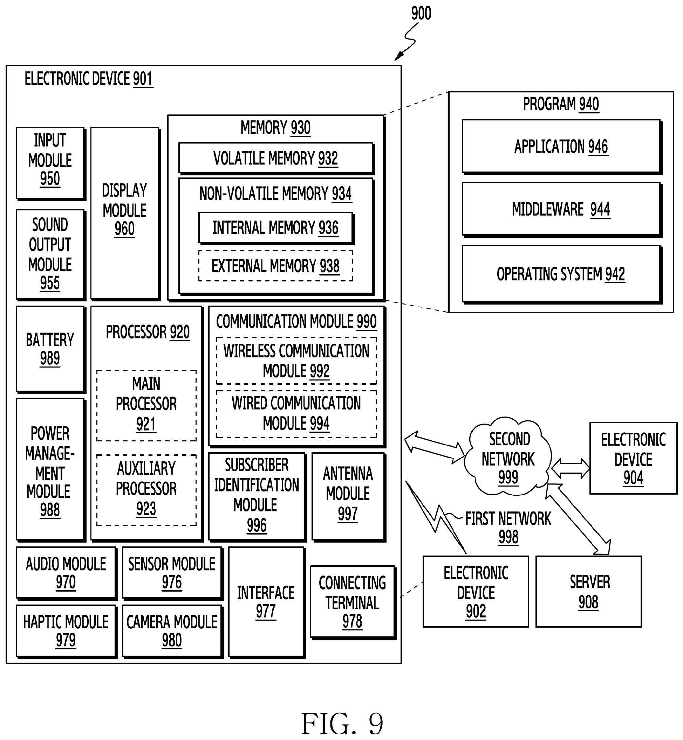

FIG. 9 is a block diagram illustrating an electronic device 901 in a network environment 900 according to various embodiments. Referring to FIG. 9, the electronic device 901 in the network environment 900 may communicate with an electronic device 902 via a first network 998 (e.g., a short-range wireless communication network), or at least one of an electronic device 904 or a server 908 via a second network 999 (e.g., a long-range wireless communication network). According to an embodiment, the electronic device 901 may communicate with the electronic device 904 via the server 908. According to an embodiment, the electronic device 901 may include a processor 920, memory 930, an input module 950, a sound output module 955, a display module 960, an audio module 970, a sensor module 976, an interface 977, a connecting terminal 978, a haptic module 979, a camera module 980, a power management module 988, a battery 989, a communication module 990, a subscriber identification module (SIM) 996, or an antenna module 997. In some embodiments, at least one of the components (e.g., the connecting terminal 978) may be omitted from the electronic device 901, or one or more other components may be added in the electronic device 901. In some embodiments, some of the components (e.g., the sensor module 976, the camera module 980, or the antenna module 997) may be implemented as a single component (e.g., the display module 960).

The processor 920 may execute, for example, software (e.g., a program 940) to control at least one other component (e.g., a hardware or software component) of the electronic device 901 coupled with the processor 920, and may perform various data processing or computation. According to an embodiment, as at least part of the data processing or computation, the processor 920 may store a command or data received from another component (e.g., the sensor module 976 or the communication module 990) in volatile memory 932, process the command or the data stored in the volatile memory 932, and store resulting data in non-volatile memory 934. According to an embodiment, the processor 920 may include a main processor 921 (e.g., a central processing unit (CPU) or an application processor (AP)), or an auxiliary processor 923 (e.g., a graphics processing unit (GPU), a neural processing unit (NPU), an image signal processor (ISP), a sensor hub processor, or a communication processor (CP)) that is operable independently from, or in conjunction with, the main processor 921. For example, when the electronic device 901 includes the main processor 921 and the auxiliary processor 923, the auxiliary processor 923 may be adapted to consume less power than the main processor 921, or to be specific to a specified function. The auxiliary processor 923 may be implemented as separate from, or as part of the main processor 921.

The auxiliary processor 923 may control at least some of functions or states related to at least one component (e.g., the display module 960, the sensor module 976, or the communication module 990) among the components of the electronic device 901, instead of the main processor 921 while the main processor 921 is in an inactive (e.g., sleep) state, or together with the main processor 921 while the main processor 921 is in an active state (e.g., executing an application). According to an embodiment, the auxiliary processor 923 (e.g., an image signal processor or a communication processor) may be implemented as part of another component (e.g., the camera module 980 or the communication module 990) functionally related to the auxiliary processor 923. According to an embodiment, the auxiliary processor 923 (e.g., the neural processing unit) may include a hardware structure specified for artificial intelligence model processing. An artificial intelligence model may be generated by machine learning. Such learning may be performed, e.g., by the electronic device 901 where the artificial intelligence is performed or via a separate server (e.g., the server 908). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 930 may store various data used by at least one component (e.g., the processor 920 or the sensor module 976) of the electronic device 901. The various data may include, for example, software (e.g., the program 940) and input data or output data for a command related thereto. The memory 930 may include the volatile memory 932 or the non-volatile memory 934.

The program 940 may be stored in the memory 930 as software, and may include, for example, an operating system (OS) 942, middleware 944, or an application 946.

The input module 950 may receive a command or data to be used by another component (e.g., the processor 920) of the electronic device 901, from the outside (e.g., a user) of the electronic device 901. The input module 950 may include, for example, a microphone, a mouse, a keyboard, a key (e.g., a button), or a digital pen (e.g., a stylus pen).

The sound output module 955 may output sound signals to the outside of the electronic device 901. The sound output module 955 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 960 may visually provide information to the outside (e.g., a user) of the electronic device 901. The display module 960 may include, for example, a display, a hologram device, or a projector and control circuitry to control a corresponding one of the display, hologram device, and projector. According to an embodiment, the display module 960 may include a touch sensor adapted to detect a touch, or a pressure sensor adapted to measure the intensity of force incurred by the touch.

The audio module 970 may convert a sound into an electrical signal and vice versa. According to an embodiment, the audio module 970 may obtain the sound via the input module 950, or output the sound via the sound output module 955 or a headphone of an external electronic device (e.g., an electronic device 902) directly (e.g., wiredly) or wirelessly coupled with the electronic device 901.

The sensor module 976 may detect an operational state (e.g., power or temperature) of the electronic device 901 or an environmental state (e.g., a state of a user) external to the electronic device 901, and then generate an electrical signal or data value corresponding to the detected state. According to an embodiment, the sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more specified protocols to be used for the electronic device 901 to be coupled with the external electronic device (e.g., the electronic device 902) directly (e.g., wiredly) or wirelessly. According to an embodiment, the interface 977 may include, for example, a high definition multimedia interface (HDMI), a universal serial bus (USB) interface, a secure digital (SD) card interface, or an audio interface.

A connecting terminal 978 may include a connector via which the electronic device 901 may be physically connected with the external electronic device (e.g., the electronic device 902). According to an embodiment, the connecting terminal 978 may include, for example, an HDMI connector, a USB connector, an SD card connector, or an audio connector (e.g., a headphone connector).

The haptic module 979 may convert an electrical signal into a mechanical stimulus (e.g., a vibration or a movement) or electrical stimulus which may be recognized by a user via his tactile sensation or kinesthetic sensation. According to an embodiment, the haptic module 979 may include, for example, a motor, a piezoelectric element, or an electric stimulator.

The camera module 980 may capture a still image or moving images. According to an embodiment, the camera module 980 may include one or more lenses, image sensors, image signal processors, or flashes.

The power management module 988 may manage power supplied to the electronic device 901. According to an embodiment, the power management module 988 may be implemented as at least part of, for example, a power management integrated circuit (PMIC).

The battery 989 may supply power to at least one component of the electronic device 901. According to an embodiment, the battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more communication processors that are operable independently from the processor 920 (e.g., the application processor (AP)) and supports a direct (e.g., wired) communication or a wireless communication. According to an embodiment, the communication module 990 may include a wireless communication module 992 (e.g., a cellular communication module, a short-range wireless communication module, or a global navigation satellite system (GNSS) communication module) or a wired communication module 994 (e.g., a local area network (LAN) communication module or a power line communication (PLC) module). A corresponding one of these communication modules may communicate with the external electronic device via the first network 998 (e.g., a short-range communication network, such as Bluetooth^{™}, wireless-fidelity (Wi-Fi) direct, or infrared data association (IrDA)) or the second network 999 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 992 may identify and authenticate the electronic device 901 in a communication network, such as the first network 998 or the second network 999, using subscriber information (e.g., international mobile subscriber identity (IMSI)) stored in the subscriber identification module 996.

The wireless communication module 992 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 992 may support a high-frequency band (e.g., the mmWave band) to achieve, e.g., a high data transmission rate. The wireless communication module 992 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 992 may support various requirements specified in the electronic device 901, an external electronic device (e.g., the electronic device 904), or a network system (e.g., the second network 999). According to an embodiment, the wireless communication module 992 may support a peak data rate (e.g., 20Gbps or more) for implementing eMBB, loss coverage (e.g., 964dB or less) for implementing mMTC, or U-plane latency (e.g., 0.5ms or less for each of downlink (DL) and uplink (UL), or a round trip of 9ms or less) for implementing URLLC.

The antenna module 997 may transmit or receive a signal or power to or from the outside (e.g., the external electronic device) of the electronic device 901. According to an embodiment, the antenna module 997 may include an antenna including a radiating element composed of a conductive material or a conductive pattern formed in or on a substrate (e.g., a printed circuit board (PCB)). According to an embodiment, the antenna module 997 may include a plurality of antennas (e.g., array antennas). In such a case, at least one antenna appropriate for a communication scheme used in the communication network, such as the first network 998 or the second network 999, may be selected, for example, by the communication module 990 (e.g., the wireless communication module 992) from the plurality of antennas. The signal or the power may then be transmitted or received between the communication module 990 and the external electronic device via the selected at least one antenna. According to an embodiment, another component (e.g., a radio frequency integrated circuit (RFIC)) other than the radiating element may be additionally formed as part of the antenna module 997.

According to various embodiments, the antenna module 997 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 901 and the external electronic device 904 via the server 908 coupled with the second network 999. Each of the electronic devices 902 or 904 may be a device of a same type as, or a different type, from the electronic device 901. According to an embodiment, all or some of operations to be executed at the electronic device 901 may be executed at one or more of the external electronic devices 902, 904, or 908. For example, if the electronic device 901 should perform a function or a service automatically, or in response to a request from a user or another device, the electronic device 901, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 901. The electronic device 901 may provide the outcome, with or without further processing of the outcome, as at least part of a reply to the request. To that end, a cloud computing, distributed computing, mobile edge computing (MEC), or client-server computing technology may be used, for example. The electronic device 901 may provide ultra low-latency services using, e.g., distributed computing or mobile edge computing. In another embodiment, the external electronic device 904 may include an internet-of-things (IoT) device. The server 908 may be an intelligent server using machine learning and/or a neural network. According to an embodiment, the external electronic device 904 or the server 908 may be included in the second network 999. The electronic device 901 may be applied to intelligent services (e.g., smart home, smart city, smart car, or healthcare) based on 5G communication technology or IoT-related technology.

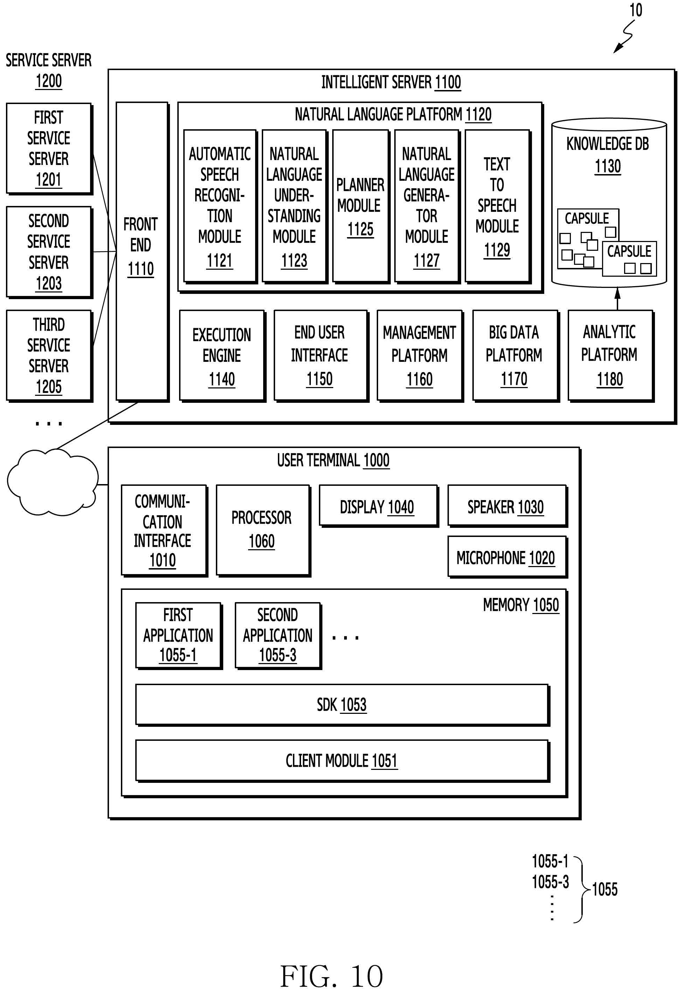

FIG. 10 is a block diagram illustrating an integrated intelligence (AI) system according to an embodiment.

Referring to FIG. 10, an integrated intelligence system 10 according to an embodiment may include a user terminal 1000, an intelligent server 1100, and a service server 1200.

The user terminal 1000 (e.g., the electronic device 101 of FIG. 1) according to an embodiment may be a terminal device (or electronic device) connectable to the Internet, and for example, it may be mobile phone, smartphone, personal digital assistant (PDA), laptop computer, TV, white goods, wearable device, HMD, or a smart speaker.

According to an embodiment, the user terminal 1000 may include a communication interface 1010, a microphone 1020, a speaker 1030, a display 1040, a memory 1050, and a processor 1060. The components listed above may be operably or electrically connected to each other.

According to an embodiment, the communication interface 1010 may be configured to be connected to an external device to transmit and receive data. According to an embodiment, the microphone 1020 may receive sound (e.g., user speech) and convert it into an electrical signal. According to an embodiment, the speaker 1030 may output an electrical signal as sound (e.g., voice). According to an embodiment, the display 1040 may be configured to display an image or video. According to an embodiment, the display 1040 may display a graphic user interface (GUI) of an app (or application program) being executed.

The display 1040 according to an embodiment may be configured to display an image or video. The display 1040 according to an embodiment may also display the graphic user interface (GUI) of an app (or application program) being executed. The display 1040 according to an embodiment may receive a touch input through a touch sensor. For example, the display 1040 may receive a text input through a touch sensor in image keyboard area displayed in the display 1040.

According to an embodiment, the memory 1050 may store a client module 1051, a software development kit (SDK) 1053, and a plurality of apps 1055. The client module 1051 and the SDK 1053 may comprise a framework (or solution program) to perform general functions. In addition, the client module 1051 or the SDK 1053 may comprise a framework for processing user input (e.g., voice input, text input, touch input).

According to an embodiment, the plurality of apps 1055 may be programs for performing a preset function. According to an embodiment, a plurality of apps 1055 may include a first app 1055_1 and a second app 1055_3. According to an embodiment, each of the plurality of apps 1055 may include a plurality of operations for performing a preset function. For example, the plurality of apps 1055 may include at least one of alarm app, message app, and schedule app. According to an embodiment, the plurality of apps 1055 may be executed by the processor 1060 to sequentially execute at least portion of the plurality of operations.

According to an embodiment, the processor 1060 may control overall operation of the user terminal 1000. For example, the processor 1060 can be electrically connected to the communication interface 1010, the microphone 1020, the speaker 1030, the display 1040, and the memory 1050 to perform a preset operation.

According to an embodiment, the processor 1060 may also execute a program stored in the memory 1050 to perform a preset function. For example, the processor 1060 may execute at least one of the client module 1051 or the SDK 1053 to perform the following operations to process user input. For example, the processor 1060 may control operations of the plurality of apps 1055 through the SDK 1053. The following operations described as operations of the client module 1051 or the SDK 1053 may be operation by execution of the processor 1060.

According to an embodiment, the client module 1051 may receive a user input. For example, the client module 1051 may generate a voice signal corresponding to a user speech detected through the microphone 1020. Alternatively, the client module 1051 may receive a touch input detected through the display 1040. Alternatively, the client module 1051 may receive a text input detected through a keyboard or an image keyboard. In addition, the client module 1051 may receive various types of user input detected through an input module included in the user terminal 1000 or an input module connected to the user terminal 1000. The client module 1051 may transmit the received user input to the intelligent server 1100. According to an embodiment, the client module 1051 may transmit state information of the user terminal 1000 to the intelligent server 1100 together with the received user input. For example, the state information may be execution state information of an app.

According to an embodiment, the client module 1051 may receive a result corresponding to the received user input. For example, the client module 1051 may receive a result corresponding to a user input from the intelligent server 1100. The client module 1051 may display the received result on the display 1040. In addition, the client module 1051 may output the received result as audio through the speaker 1030.

According to an embodiment, the client module 1051 may receive a plan corresponding to the received user input. The client module 1051 may display a result of executing a plurality of operations of an app according to the plan on the display 1040. For example, the client module 1051 may sequentially display the execution results of the plurality of operations on the display and output audio through the speaker 1030. For another example, the user terminal 1000 may display a portion of result (e.g., the result of the last operation) of executing the plurality of operations on the display, and output audio through the speaker 1030.

According to an embodiment, the client module 1051 may receive a request for obtaining information necessary to calculate a result corresponding to a user input from the intelligent server 1100. For example, information required to calculate the result may be state information of the user terminal 1000. According to an embodiment, the client module 1051 may transmit the necessary information to the intelligent server 1100 in response to the request.

According to an embodiment, the client module 1051 may transmit result information executing a plurality of operations according to a plan to the intelligent server 1100. The intelligent server 1100 may identify that the user input received through the result information is correctly processed.

According to an embodiment, the client module 1051 may include a voice recognition module. According to an embodiment, the client module 1051 may recognize a voice input performing a limited function through the voice recognition module. For example, the client module 1051 may perform an intelligent app to process voice input for performing organic operations through a preset input (e.g., wake up!).

According to an embodiment, the intelligent server 1100 may receive information related to a user voice input from the user terminal 1000 through a communication network. According to an embodiment, the intelligent server 1100 may change data related to the received voice input into text data. According to an embodiment, the intelligent server 1100 may generate a plan for performing a task corresponding to a user voice input based on the text data.

According to an embodiment, the plan may be generated by an artificial intelligence (AI) system. The AI system may be a rule-based system, or a neural network-based system (e.g., feedforward neural network (FNN), or recurrent neural network (RNN)). Alternatively, it may be a combination of the described above or an artificial intelligence system different therefrom. According to an embodiment, a plan may be selected from a set of predefined plans or may be generated in real time in response to a user request. For example, the AI system may select at least one plan from a plurality of predefined plans.

According to an embodiment, the intelligent server 1100 may transmit a result calculated according to the generated plan to the user terminal 1000 or transmit the generated plan to the user terminal 1000. According to an embodiment, the user terminal 1000 may display a result calculated according to a plan on a display. According to an embodiment, the user terminal 1000 may display a result of executing an operation according to a plan on a display.

The intelligent server 1100 according to an embodiment may include a front end 1110, a natural language platform 1120, a knowledge DB 1130, an execution engine 1140, an end user interface 1150, a management platform 1160, a big data platform 1170, and an analysis platform 1180.

According to an embodiment, the front end 1110 may receive a user input received from the user terminal 1000. The front end 1110 may transmit a response corresponding to the user input.

According to an embodiment, the natural language platform 1120 may include an automatic speech recognition module (ASR module) 1121, a natural language understanding module (NLU module) 1123, a planner module 1125, a natural language generator module (NLG module) 1127, and a text to speech module (TTS module) 1129.

According to an embodiment, the automatic speech recognition module 1121 may convert a voice input received from the user terminal 1000 into text data. According to an embodiment, the natural language understanding module 1123 may understand a user's intention using text data of a voice input. For example, the natural language understanding module 1123 may perform syntactic analyze or semantic analyze on user input in a form of text data to understand the user's intention. According to an embodiment, the natural language understanding module 1123 may understand the meaning of words extracted from user input by using linguistic features (e.g., grammatical elements) of morphemes or phrases, and determine user's intention by matching the meaning of the identified word to the intention. The natural language understanding module 1123 may obtain intent information corresponding to user speech. The intent information may be information indicating a user's intention determined by interpreting text data. The intent information may include information indicating an operation or function that the user wants to execute using the device.

According to an embodiment, the planner module 1125 may generate a plan by using intention and parameter determined by the natural language understanding module 1123. According to an embodiment, the planner module 1125 may determine a plurality of domains necessary to perform a task based on the determined intention. The planner module 1125 may determine a plurality of operations included in each of the plurality of domains determined based on the intention. According to an embodiment, the planner module 1125 may determine a parameter required to execute the plurality of determined operations or a result value outputted by the execution of the plurality of operations. The parameter and the result value may be defined as a concept related to a preset format (or class). Accordingly, the plan may include a plurality of operations and a plurality of concepts determined by the intention of the user. The planner module 1125 may determine a relationship between the plurality of operations and the plurality of concepts in stages (or hierarchical). For example, the planner module 1125 may determine execution order of a plurality of operations determined based on the user's intention, based on a plurality of concepts. In other words, the planner module 1125 may determine execution order of plurality of operations, based on a parameter required for the execution of the plurality of operations and a results outputted by the execution of the plurality of operations. Accordingly, the planner module 1125 may generate a plan including association information (e.g., ontology) between the plurality of operations and the plurality of concepts. The planner module 1125 may generate a plan by using information stored in the capsule database 1130 where a set of relationships between concept and operation is stored.

According to an embodiment, the natural language generation module 1127 may change a preset information into text form. The information changed to text form may be a form of natural language speech. The text voice conversion module 1129 according to an embodiment may change text-type information into voice-type information.

According to an embodiment, the capsule database 1130 may store information on a relationship between a plurality of concepts corresponding to a plurality of domains and operations. For example, the capsule database 1130 may store a plurality of capsules including a plurality of action object (or action information) and concept object (or concept information) of the plan. According to an embodiment, the capsule database 1130 may store the plurality of capsules in a form of a concept action network (CAN). According to an embodiment, a plurality of capsules may be stored in a function registry included in the capsule database 1130.

According to an embodiment, the capsule database 1130 may include a strategy registry in which strategy information required when determining a plan corresponding to a voice input is stored. The strategy information may include reference information for determining one plan when a plurality of plans corresponding to a user input exist. According to an embodiment, the capsule database 1130 may include a follow-up registry in which information on a follow-up operation for proposing a follow-up operation to the user in a preset situation is stored. The follow-up may include, for example, follow-up speech. According to an embodiment, the capsule database 1130 may include a layout registry for storing layout information of information outputted through the user terminal 1000. According to an embodiment, the capsule database 1130 may include a vocabulary registry in which vocabulary information included in capsule information is stored. According to an embodiment, the capsule database 1130 may include a dialog registry in which dialog (or interaction) information with a user is stored.

According to an embodiment, the capsule database 1130 may update an object stored through a developer tool. For example, the developer tool may include a function editor for updating an action object or concept object. The developer tool may include a vocabulary editor for updating a vocabulary. The developer tool may include a strategy editor that generates and registers a strategy for determining a plan. The developer tool may include a dialog editor that generates a dialog with a user. The developer tool may include a follow-up editor activating subsequent goal and editing subsequent speech that provide hints. The subsequent goal may be determined based on a currently set goal, user preference, or environmental condition.

According to an embodiment, the capsule database 1130 may also be implemented in the user terminal 1000. In other words, the user terminal 1000 may include a capsule database 1130 storing information for determining an operation corresponding to a voice input.

According to an embodiment, the execution engine 1140 may calculate a result by using the generated plan. According to an embodiment, the end user interface 1150 may transmit the calculated result to the user terminal 1000. Accordingly, the user terminal 1000 may receive the result and provide the received result to the user. According to an embodiment, the management platform 1160 may manage information used in the intelligent server 1100. According to an embodiment, the big data platform 1170 may collect user data. According to an embodiment, the analysis platform 1180 may manage a quality of service (QoS) of the intelligent server 1100. For example, the analysis platform 1180 may manage components and processing speed (or efficiency) of the intelligent server 1100.

According to an embodiment, the service server 1200 may provide a preset service (e.g., food order or hotel reservation) to the user terminal 1000. According to an embodiment, the service server 1200 may be a server operated by a third party. For example, the service server 1200 may include a first service server 1201, a second service server 1203, and a third service server 1205 operated by different third parties. According to an embodiment, the service server 1200 may provide information for generating a plan corresponding to the received voice input to the intelligent server 1100. For example, the provided information may be stored in the capsule database 1130. In addition, the service server 1200 may provide result information according to the plan to the intelligent server 1100.

In the integrated intelligence system 10 described above, the user terminal 1000 may provide various intelligent services to the user in response to user input. For example, the user input may include an input through a physical button, a touch input, or a voice input.

According to an embodiment, the user terminal 1000 may provide a voice recognition service through an intelligent app (or a voice recognition app) stored therein. In this case, for example, the user terminal 1000 may recognize the user's utterance or voice input received through the microphone and provide a service corresponding to the recognized voice input to the user.

According to an embodiment, the user terminal 1000 may perform a preset operation alone or with the intelligent server and/or service server, based on the received voice input. For example, the user terminal 1000 may execute an app corresponding to the received voice input and perform a preset operation through the executed app.

According to an embodiment, when the user terminal 1000 provides a service together with the intelligent server 1100 and/or the service server, the user terminal may detect a user's utterance using the microphone 1020 and generate a signal (or voice data) corresponding to the detected user's utterance. The user terminal may transmit the voice data to the intelligent server 1100 by using the communication interface 1010.

According to an embodiment, the intelligent server 1100 may generate a plan for performing a task corresponding to the voice input or a result of performing an operation according to the plan, in response to the voice input received from the user terminal 1000. For example, the plan may include a plurality of operations for performing a task corresponding to the user's voice input and a plurality of concepts related to the plurality of operations. The concept may define a parameter to be inputted to the execution of the plurality of operations or result values to be outputted by the execution of the plurality of operations. The plan may include association information between the plurality of operations and the plurality of concepts.

The user terminal 1000 according to an embodiment may receive the response using the communication interface 1010. The user terminal 1000 may output a voice signal generated inside the user terminal 1000 to the outside by using the speaker 1030, or may output an image generated inside the user terminal 1000 to the outside by using the display 1040.

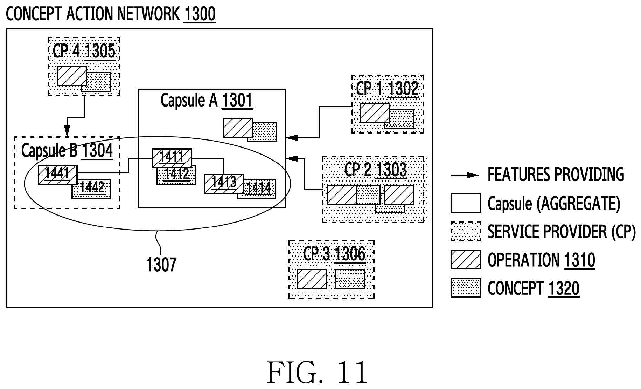

FIG. 11 is a diagram illustrating a form in which relationship information between a concept and an action is stored in a database, according to an embodiment.

The capsule database (e.g., the capsule database 1130 of FIG. 10) of the intelligent server (e.g., the intelligent server 1100 of FIG. 10) may store a plurality of capsules in a form of a concept action network (CAN) 1300. The capsule database may store an operation for processing a task corresponding to a user's voice input and a parameter necessary for the operation in a form of a concept action network (CAN). The CAN may represent an organic relationship between an action and a concept defining a parameter required to perform the action.

The capsule database may store a plurality of capsules (e.g., Capsule A 1301, Capsule B 1304) corresponding to each of a plurality of domains (e.g., application). According to an embodiment, one capsule (e.g., Capsule A 1301) may correspond to one domain (e.g., application). In addition, one capsule may correspond to at least one service provider (e.g., CP 1 1302, CP 2 1303, CP 3 1306, or CP 4 1305) to perform a function of the domain related to the capsule. According to an embodiment, one capsule may include at least one operation 1310 and at least one concept 1320 for performing a preset function.

According to an embodiment, a natural language platform (e.g., the natural language platform 1120 of FIG. 10) may generate a plan for performing a task corresponding to the received voice input using a capsule stored in the capsule database. For example, a planner module (e.g., the planner module 1125 in FIG. 10) of the natural language platform may generate a plan by using a capsule stored in the capsule database. For example, a plan 1307 may be generated by using the operations 1411 and 1413 and concepts 1412 and 1414 of the Capsule A 1301, and operations 1441 and concepts 1442 of the Capsule B 1304.

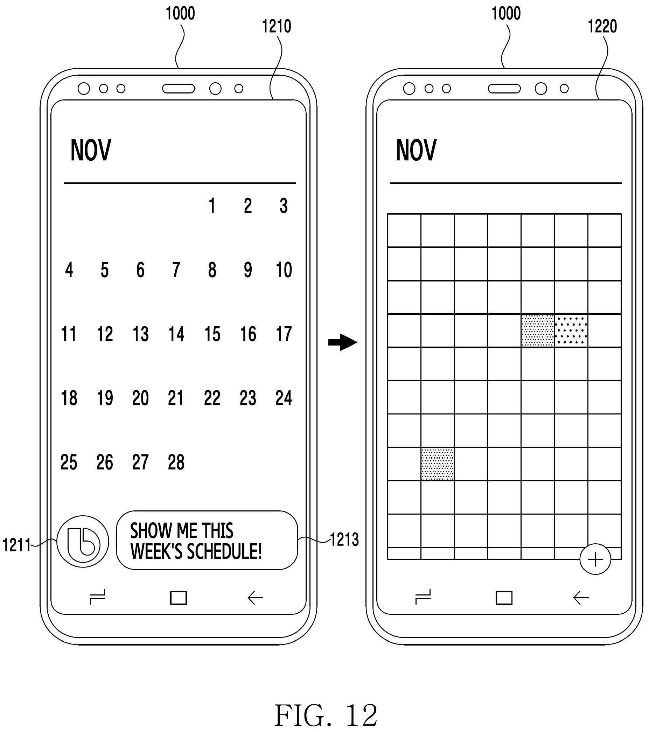

FIG. 12 is a diagram illustrating a user terminal that displays a screen for processing a voice input received through an intelligent app, according to an embodiment.

The user terminal 1000 may execute an intelligent app for processing a user input through an intelligent server (e.g., the intelligent server 1100 of FIG. 13).

According to an embodiment, in the screen 1210, the user terminal 1000 may execute an intelligent app for processing the voice input when recognizing a preset voice input (e.g., wake up!) or receiving an input through a hardware key (e.g., a dedicated hardware key). For example, the user terminal 1000 may execute an intelligent app in a state of executing a schedule app. According to an embodiment, the user terminal 1000 may display an object (e.g., icon) 1211 corresponding to an intelligent app on a display (e.g., the display 1040 of FIG. 10). According to an embodiment, the user terminal 1000 may receive a voice input by a user utterance. For example, the user terminal 1000 may receive a voice input saying, "Tell me the schedule of this week!". According to an embodiment, the user terminal 1000 may display a user interface (UI) 1213 (e.g., an input window) of an intelligent app in which text data of the received voice input is displayed on the display.

According to an embodiment, on screen 1220, the user terminal 1000 may display a result corresponding to the received voice input on the display. For example, the user terminal 1000 may receive a plan corresponding to the received user input and display 'schedule of this week' on the display according to the plan.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 940) including one or more instructions that are stored in a storage medium (e.g., internal memory 936 or external memory 938) that is readable by a machine (e.g., the electronic device 901). For example, a processor (e.g., the processor 920) of the machine (e.g., the electronic device 901) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added. The electronic device 901 of FIG. 9 may be an example of the electronic device described with reference to FIGS. 1 to 8 (e.g., the server 201 and/or the user terminal 202 of FIGS. 2A to 2B). For example, the processor 920 of FIG. 9 may correspond to at least one of the processors 210-1 and 210-2 of FIGS. 2A to 2B. The memory 930 of FIG. 9 may correspond to at least one of the memory 215-1 and 215-2 of FIGS. 2A to 2B. The communication module 990 of FIG. 9 may correspond to at least one of the communication circuitry 220-1 and 220-2 of FIGS. 2A to 2B. The display module 960 of FIG. 9 may correspond to the display 225 of FIGS. 2A to 2B.

In an embodiment, a method for efficiently managing a large-capacity database used to generate natural language may be required. In an embodiment, a method for selecting and/or deleting unnecessary information stored in the database used to generate natural language may be required. As described above, an electronic device according to an embodiment may comprise a display (e.g., the display 225 of FIG. 2A and/or FIG. 2B), memory for storing instructions (e.g., the memory 215-2 of FIG. 2A and/or FIG. 2B), and a processor (e.g., the processor 210-2 of FIG. 2A and/or FIG. 2B). The instructions, when executed by the processor, may cause the electronic device to detect a request for generating a natural language sentence with respect to at least one prompt sentence. The instructions, when executed by the processor, may cause the electronic device to, in response to the request, generate a response message (e.g., the response message 160 of FIG. 1) corresponding to the at least one prompt sentence by using a database (e.g., the database 130 of FIG. 2A and/or FIG. 2B) in which information is accumulated. The database may include, as attributes to be used to adjust a size of the database, a first attribute indicating whether to delete the information, and a second attribute indicating whether an input for prohibiting deletion of the information is received through a screen displayed on the display by using the first attribute. The electronic device according to an embodiment may efficiently manage a large-capacity database used to generate natural language. The electronic device according to an embodiment may select or delete unnecessary information stored in the database used to generate natural language.

For example, the first attribute of the database may be associated with at least one of a first moment when the information is inputted to the database, a second moment when the information is used to generate a response message, a frequency at which the information is used to generate a response message, or feedback with respect to a response message generated by using the information.

For example, the instructions, when executed by the processor, may cause the electronic device to, by comparing a score, that is associated with at least one of the first moment, the second moment, the frequency, or the feedback, with a preset threshold, determine whether to display information within the database corresponding to the score on the screen.

For example, the instructions, when executed by the processor, may cause the electronic device to control the display to display at least one visual object associated with the feedback on another screen including the response message. The instructions, when executed by the processor, may cause the electronic device to, in response to an input associated with the at least one visual object, change the feedback of the first attribute.

For example, the instructions, when executed by the processor, may cause the electronic device to change at least one of the second moment or the frequency corresponding to the information associated with the response message when generating the response message.

For example, the instructions, when executed by the processor, may cause the electronic device to determine at least a portion of the information to be displayed on the screen by using the first attribute.

For example, the instructions, when executed by the processor, may cause the electronic device to control the display to display, in the screen displayed based on a preset condition, a visual object to receive an input indicating prohibition of deletion of the at least a portion, with the at least a portion of the information displayed on the screen.

For example, the instructions, when executed by the processor, may cause the electronic device to, in response to an input with respect to the visual object, change the second attribute in the database corresponding to the at least a portion of the information.

For example, the instructions, when executed by the processor, may cause the electronic device to control the display to display the screen at a moment reserved to adjust the size of the database.

For example, the instructions, when executed by the processor, may cause the electronic device to, by using a neural network trained to refer to the information stored in the database, generate the response message corresponding to the at least one prompt sentence.

As described above, in an embodiment, a method of an electronic device comprising a display may be provided. The method may comprise detecting a request for generating a natural language sentence with respect to at least one prompt sentence. The method may comprise, in response to the request, generating a response message corresponding to the at least one prompt sentence by using a database in which information is accumulated. The method may comprise controlling the display to display the generated response message. The database may include, as attributes to be used to adjust a size of the database, a first attribute indicating whether to delete the information, and a second attribute indicating whether an input for prohibiting deletion of the information is received through a screen displayed on the display by using the first attribute.

For example, the first attribute of the database may be associated with at least one of a first moment when the information is inputted to the database, a second moment when the information is used to generate a response message, a frequency at which the information is used to generate the response message, or feedback with respect to a response message generated by using the information.

For example, the method may comprise, by comparing a score, that is associated with at least one of the first moment, the second moment, the frequency, or the feedback, with a preset threshold, determining whether to display information within the database corresponding to the score on the screen.

For example, the controlling may comprise controlling the display to display at least one visual object associated with the feedback on another screen including the response message. The controlling may comprise, in response to an input associated with the at least one visual object, changing the feedback of the first attribute.

For example, the generating may comprise changing at least one of the second moment or the frequency corresponding to the information associated with the generated response message.

For example, the method may comprise determining at least a portion of the information to be displayed on the screen by using the first attribute.

For example, the method may comprise controlling the display to display, in the screen displayed based on a preset condition, a visual object to receive an input indicating prohibition of deletion of the at least a portion, with the at least a portion of the information displayed on the screen.

For example, the method may comprise, in response to an input with respect to the visual object, changing the second attribute in the database corresponding to the at least a portion of the information.

For example, the method may comprise controlling the display to display the screen at a moment reserved to adjust the size of the database.

For example, the generating may comprise, by using a neural network trained to refer to the information stored in the database, generating the response message corresponding to the at least one prompt sentence.

As described above, in an embodiment, a non-transitory computer readable storage medium storing instructions may be provided. The instructions, when executed by an electronic device comprising communication circuitry and storage, may cause the electronic device to receive, from a user terminal through the communication circuitry, at least one prompt sentence. The instructions, when executed by the processor, may cause the electronic device to generate a response message corresponding to the at least one prompt sentence by using a database stored in the storage. The instructions, when executed by the processor, may cause the electronic device to transmit, to the user terminal through the communication circuitry, information used to display the generated response message. The database may include, as attributes to be used to adjust a size of the database occupying the storage, a first attribute indicating whether to delete information stored in the database, and a second attribute indicating whether an input for prohibiting deletion of the information is received before deleting the information by using the first attribute.

For example, the instructions, when executed by the electronic device, may cause the electronic device to, by using a neural network trained to refer to the information stored in the database, generate the response message corresponding to the at least one prompt sentence.

For example, the first attribute of the database may be associated with at least one of a first moment when the information is inputted to the database, a second moment when the information is used to generate a response message, a frequency at which the information is used to generate a response message, or feedback with respect to a response message generated by using the information.

For example, the instructions, when executed by the electronic device, may cause the electronic device to, by comparing a score, that is associated with at least one of the first moment, the second moment, the frequency, or the feedback, with a preset threshold, determine whether to provide a screen for receiving the input corresponding to the information.

As described above, an electronic device according to an embodiment may comprise communication circuitry, memory for storing instructions, and a processor. The instructions, when executed by the processor, may cause the electronic device to receive, from a user terminal through the communication circuitry, at least one prompt sentence. The instructions, when executed by the processor, may cause the electronic device to generate a response message corresponding to the at least one prompt sentence by using a database stored in the storage. The instructions, when executed by the processor, may cause the electronic device to transmit, to the user terminal through the communication circuitry, information used to display the generated response message. The database may include, as attributes to be used to adjust a size of the database occupying the storage, a first attribute indicating whether to delete information stored in the database, and a second attribute indicating whether an input for prohibiting deletion of the information is received before deleting the information by using the first attribute.

For example, the instructions, when executed by the processor, may cause the electronic device to, by using a neural network trained to refer to the information stored in the database, generate the response message corresponding to the at least one prompt sentence.

For example, the first attribute of the database may be associated with at least one of a first moment when the information is inputted to the database, a second moment when the information is used to generate a response message, a frequency at which the information is used to generate a response message, or feedback with respect to a response message generated by using the information.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

Although the embodiments have been described above with reference to limited examples and drawings, various modifications and variations may be made from the above description by those skilled in the art. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device, comprising:
a display;
memory including one or more storage media storing instructions; and
at least one processor,
wherein the instructions, when executed by the at least one processor individually or collectively, cause the electronic device to:
detect a request for generating a natural language sentence with respect to at least one prompt sentence;
in response to the request, generate a response message corresponding to the at least one prompt sentence by using a database in which information is accumulated; and
control the display to display the generated response message,
wherein the database includes, as attributes to be used to adjust a size of the database, a first attribute indicating whether to delete the information, and a second attribute indicating whether an input for prohibiting deletion of the information is received through a screen displayed on the display by using the first attribute.

2. The electronic device of claim 1, wherein the first attribute of the database is associated with at least one of a first moment when the information is inputted to the database, a second moment when the information is used to generate a response message, a frequency at which the information is used to generate a response message, or feedback with respect to a response message generated by using the information.

3. The electronic device of any one of claims 1 to 2, wherein the instructions, when executed by the at least one processor individually or collectively, cause the electronic device to:
by comparing a score, that is associated with at least one of the first moment, the second moment, the frequency, or the feedback, with a preset threshold, determine whether to display information within the database corresponding to the score on the screen.

4. The electronic device of any one of claims 1 to 3, wherein the instructions, when executed by the at least one processor individually or collectively, cause the electronic device to:
control the display to display at least one visual object associated with the feedback on another screen including the response message;
in response to an input associated with the at least one visual object, change the feedback of the first attribute.

5. The electronic device of any one of claims 1 to 4, wherein the instructions, when executed by the at least one processor individually or collectively, cause the electronic device to:
change at least one of the second moment or the frequency corresponding to the information associated with the response message when generating the response message.

6. The electronic device of any one of claims 1 to 5, wherein the instructions, when executed by the at least one processor individually or collectively, cause the electronic device to:
determine at least a portion of the information to be displayed on the screen by using the first attribute.

7. The electronic device of any one of claims 1 to 6, wherein the instructions, when executed by the at least one processor individually or collectively, cause the electronic device to:
control the display to display, in the screen displayed based on a preset condition, a visual object to receive an input indicating prohibition of deletion of the at least a portion, with the at least a portion of the information displayed on the screen.

8. The electronic device of any one of claims 1 to 7, wherein the instructions, when executed by the at least one processor individually or collectively, cause the electronic device to:
in response to an input with respect to the visual object, change the second attribute in the database corresponding to the at least a portion of the information.

9. The electronic device of any one of claims 1 to 8, wherein the instructions, when executed by the at least one processor individually or collectively, cause the electronic device to:
control the display to display the screen at a moment reserved to adjust the size of the database.

10. The electronic device of any one of claims 1 to 9, wherein the instructions, when executed by the processor individually or collectively, cause the electronic device to:
by using a neural network trained to refer to the information stored in the database, generate the response message corresponding to the at least one prompt sentence.

11. A method of an electronic device comprising a display, comprising:
detecting a request for generating a natural language sentence with respect to at least one prompt sentence;
in response to the request, generating a response message corresponding to the at least one prompt sentence by using a database in which information is accumulated; and
controlling the display to display the generated response message,
wherein the database includes, as attributes to be used to adjust a size of the database, a first attribute indicating whether to delete the information, and a second attribute indicating whether an input for prohibiting deletion of the information is received through a screen displayed on the display by using the first attribute.

12. The electronic device of claim 11, wherein the first attribute of the database is associated with at least one of a first moment when the information is inputted to the database, a second moment when the information is used to generate a response message, a frequency at which the information is used to generate a response message, or feedback with respect to a response message generated by using the information.

13. The method of any one of claims 11 to 12, further comprising:
by comparing a score, that is associated with at least one of the first moment, the second moment, the frequency, or the feedback, with a preset threshold, determining whether to display information within the database corresponding to the score on the screen.

14. The method of any one of claims 11 to 13, wherein the controlling comprising:
controlling the display to display at least one visual object associated with the feedback on another screen including the response message;
in response to an input associated with the at least one visual object, changing the feedback of the first attribute.

15. The method of any one of claims 11 to 14, wherein the generating comprising:
changing at least one of the second moment or the frequency corresponding to the information associated with the generated response message.
